(19)

Europäisches
Patentamt
European
Patent Office
Office européen
des brevets

(11) **EP 4 590 026 A1**

(12) **EUROPEAN PATENT APPLICATION**
published in accordance with Art. 153(4) EPC

(43) Date of publication:
**23.07.2025 Bulletin 2025/30**

(21) Application number: 23865929.6

(22) Date of filing: **18.09.2023**

(51) International Patent Classification (IPC):
*H04W 40/22* (2009.01)    *H04W 40/12* (2009.01)
*H04W 36/00* (2009.01)    *H04W 76/18* (2018.01)
*H04W 76/14* (2018.01)    *H04W 88/04* (2009.01)
*H04L 45/24* (2022.01)

(52) Cooperative Patent Classification (CPC):
H04L 45/24; H04W 36/00; H04W 40/12;
H04W 40/22; H04W 76/14; H04W 76/18;
H04W 88/04

(86) International application number:
**PCT/KR2023/014050**

(87) International publication number:
**WO 2024/058636 (21.03.2024 Gazette 2024/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.09.2022  KR 20220117357
19.09.2022  KR 20220118018
19.09.2022  KR 20220118048
28.09.2022  KR 20220123298
29.09.2022  US 202263411569 P**

(71) Applicant: **LG Electronics Inc.
Yeongdeungpo-gu
Seoul 07336 (KR)**

(72) Inventors:
 • **BACK, Seoyoung**
  **Seoul 06772 (KR)**
 • **LEE, Youngdae**
  **Seoul 06772 (KR)**
 • **LEE, Seungmin**
  **Seoul 06772 (KR)**
 • **PARK, Giwon**
  **Seoul 06772 (KR)**
 • **KIM, Laeyoung**
  **Seoul 06772 (KR)**
 • **BYUN, Daewook**
  **Seoul 06772 (KR)**
 • **KIM, Seokjung**
  **Seoul 06772 (KR)**

(74) Representative: **Mooser, Sebastian Thomas
Wuesthoff & Wuesthoff
Patentanwälte und Rechtsanwalt PartG mbB
Schweigerstraße 2
81541 München (DE)**

(54) **OPERATION METHOD RELATED TO HANDOVER OF REMOTE UE AND RELAY UE IN WIRELESS COMMUNICATION SYSTEM**

(57)    Provided in one embodiment is a serving base station operation method related to handover (HO) of a remote UE in a wireless communication system, the method including a serving base station, which receives a measurement result from the remote UE, selects a target base station for the HO of the remote UE, transmits an HO request message to the target base station, and transmits, to the remote UE, an RRC reconfiguration with sync message transmitted from the target base station, wherein, on the basis that the serving base station has determined HO, to the target base station, of the remote UE and a relay UE of the remote UE, the RRC reconfiguration with sync message includes information indicating that the remote UE is to maintain a connection with the relay UE.

**(Cont. next page)**

# FIG. 15

| Remote UE | Remote UE | Serving gNB | Target gNB |
|---|---|---|---|

UL/DL data (S1500)

UL/DL data (S1500')

Measurement and reporting (S1501)

Measurement and reporting (S1501')

Determining that remote UE and relay UE are allowed to be subjected to HO to same target gNB

XnAP HO req/NGAP HO required (S1502a)

(Indicating that remote UE and relay UE are in multi-path relaying relationship)

HO req ACK(/HO preparation failure) (S1502b)

RRC reconfiguration for relay UE (HO 지시) (S1502)

RRC reconfiguration for remote UE (HO 지시) (S1502')

RRC reconfigurationComplete from relay UE (S1503)

RRC reconfigurationComplete from remote UE (S1503')

UL/DL data (S1504)

UL/DL data (S1504')

**Description**

[Technical Field]

The following description relates to a wireless communication system, and more particularly, to operation methods and devices for a serving base station, a target base station, a remote UE, and a relay UE related to the handover of the remote UE and the relay UE.

[Background Art]

A wireless communication system uses various radio access technologies (RATs) such as long term evolution (LTE), LTE-advanced (LTE-A), and wireless fidelity (WiFi). 5th generation (5G) is such a wireless communication system. Three key requirement areas of 5G include (1) enhanced mobile broadband (eMBB), (2) massive machine type communication (mMTC), and (3) ultra-reliable and low latency communications (URLLC). Some use cases may require multiple dimensions for optimization, while others may focus only on one key performance indicator (KPI). 5G supports such diverse use cases in a flexible and reliable way.

eMBB goes far beyond basic mobile Internet access and covers rich interactive work, media and entertainment applications in the cloud or augmented reality (AR). Data is one of the key drivers for 5G and in the 5G era, we may for the first time see no dedicated voice service. In 5G, voice is expected to be handled as an application program, simply using data connectivity provided by a communication system. The main drivers for an increased traffic volume are the increase in the size of content and the number of applications requiring high data rates. Streaming services (audio and video), interactive video, and mobile Internet connectivity will continue to be used more broadly as more devices connect to the Internet. Many of these applications require always-on connectivity to push real time information and notifications to users. Cloud storage and applications are rapidly increasing for mobile communication platforms. This is applicable for both work and entertainment. Cloud storage is one particular use case driving the growth of uplink data rates. 5G will also be used for remote work in the cloud which, when done with tactile interfaces, requires much lower end-to-end latencies in order to maintain a good user experience. Entertainment, for example, cloud gaming and video streaming, is another key driver for the increasing need for mobile broadband capacity. Entertainment will be very essential on smart phones and tablets everywhere, including high mobility environments such as trains, cars and airplanes. Another use case is augmented reality (AR) for entertainment and information search, which requires very low latencies and significant instant data volumes.

One of the most expected 5G use cases is the functionality of actively connecting embedded sensors in every field, that is, mMTC. It is expected that there will be 20.4 billion potential Internet of things (IoT) devices by 2020. In industrial IoT, 5G is one of areas that play key roles in enabling smart city, asset tracking, smart utility, agriculture, and security infrastructure.

URLLC includes services which will transform industries with ultra-reliable/available, low latency links such as remote control of critical infrastructure and self-driving vehicles. The level of reliability and latency are vital to smart-grid control, industrial automation, robotics, drone control and coordination, and so on.

Now, multiple use cases will be described in detail.

5G may complement fiber-to-the home (FTTH) and cable-based broadband (or data-over-cable service interface specifications (DOCSIS)) as a means of providing streams at data rates of hundreds of megabits per second to giga bits per second. Such a high speed is required for TV broadcasts at or above a resolution of 4K (6K, 8K, and higher) as well as virtual reality (VR) and AR. VR and AR applications mostly include immersive sport games. A special network configuration may be required for a specific application program. For VR games, for example, game companies may have to integrate a core server with an edge network server of a network operator in order to minimize latency.

The automotive sector is expected to be a very important new driver for 5G, with many use cases for mobile communications for vehicles. For example, entertainment for passengers requires simultaneous high capacity and high mobility mobile broadband, because future users will expect to continue their good quality connection independent of their location and speed. Other use cases for the automotive sector are AR dashboards. These display overlay information on top of what a driver is seeing through the front window, identifying objects in the dark and telling the driver about the distances and movements of the objects. In the future, wireless modules will enable communication between vehicles themselves, information exchange between vehicles and supporting infrastructure and between vehicles and other connected devices (e.g., those carried by pedestrians). Safety systems may guide drivers on alternative courses of action to allow them to drive more safely and lower the risks of accidents. The next stage will be remote-controlled or self-driving vehicles. These require very reliable, very fast communication between different self-driving vehicles and between vehicles and infrastructure. In the future, self-driving vehicles will execute all driving activities, while drivers are focusing on traffic abnormality elusive to the vehicles themselves. The technical requirements for self-driving vehicles call for ultra-low latencies and ultra-high reliability, increasing traffic safety to levels humans cannot achieve.

Smart cities and smart homes, often referred to as smart society, will be embedded with dense wireless sensor networks. Distributed networks of intelligent sensors will identify conditions for cost- and energy-efficient maintenance of the city or home. A similar setup can be done for each home, where temperature sensors, window and heating controllers, burglar alarms, and home appliances are all connected wirelessly. Many of these sensors are typically characterized by low data rate, low power, and low cost, but for example, real time high definition (HD) video may be required in some types of devices for surveillance.

The consumption and distribution of energy, including heat or gas, is becoming highly decentralized, creating the need for automated control of a very distributed sensor network. A smart grid interconnects such sensors, using digital information and communications technology to gather and act on information. This information may include information about the behaviors of suppliers and consumers, allowing the smart grid to improve the efficiency, reliability, economics and sustainability of the production and distribution of fuels such as electricity in an automated fashion. A smart grid may be seen as another sensor network with low delays.

The health sector has many applications that may benefit from mobile communications. Communications systems enable telemedicine, which provides clinical health care at a distance. It helps eliminate distance barriers and may improve access to medical services that would often not be consistently available in distant rural communities. It is also used to save lives in critical care and emergency situations. Wireless sensor networks based on mobile communication may provide remote monitoring and sensors for parameters such as heart rate and blood pressure.

Wireless and mobile communications are becoming increasingly important for industrial applications. Wires are expensive to install and maintain, and the possibility of replacing cables with reconfigurable wireless links is a tempting opportunity for many industries. However, achieving this requires that the wireless connection works with a similar delay, reliability and capacity as cables and that its management is simplified. Low delays and very low error probabilities are new requirements that need to be addressed with 5G

Finally, logistics and freight tracking are important use cases for mobile communications that enable the tracking of inventory and packages wherever they are by using location-based information systems. The logistics and freight tracking use cases typically require lower data rates but need wide coverage and reliable location information.

A wireless communication system is a multiple access system that supports communication of multiple users by sharing available system resources (a bandwidth, transmission power, etc.). Examples of multiple access systems include a CDMA system, an FDMA system, a TDMA system, an OFDMA system, an SC-FDMA system, and an MC-FDMA system.

Sidelink (SL) refers to a communication scheme in which a direct link is established between user equipments (UEs) and the UEs directly exchange voice or data without intervention of a base station (BS). SL is considered as a solution of relieving the BS of the constraint of rapidly growing data traffic.

Vehicle-to-everything (V2X) is a communication technology in which a vehicle exchanges information with another vehicle, a pedestrian, and infrastructure by wired/wireless communication. V2X may be categorized into four types: vehicle-to-vehicle (V2V), vehicle-to-infrastructure (V2I), vehicle-to-network (V2N), and vehicle-to-pedestrian (V2P). V2X communication may be provided via a PC5 interface and/or a Uu interface.

As more and more communication devices demand larger communication capacities, there is a need for enhanced mobile broadband communication relative to existing RATs. Accordingly, a communication system is under discussion, for which services or UEs sensitive to reliability and latency are considered. The next-generation RAT in which eMBB, MTC, and URLLC are considered is referred to as new RAT or NR. In NR, V2X communication may also be supported.

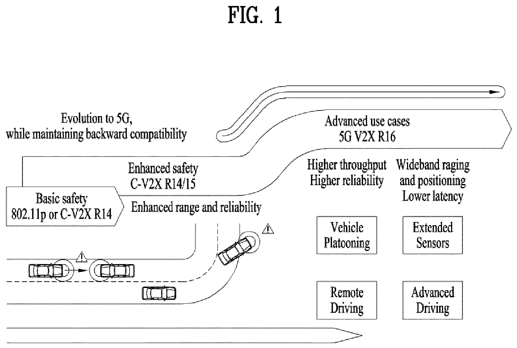

FIG. 1 is a diagram illustrating V2X communication based on pre-NR RAT and V2X communication based on NR in comparison.

For V2X communication, a technique of providing safety service based on V2X messages such as basic safety message (BSM), cooperative awareness message (CAM), and decentralized environmental notification message (DENM) was mainly discussed in the pre-NR RAT. The V2X message may include location information, dynamic information, and attribute information. For example, a UE may transmit a CAM of a periodic message type and/or a DENM of an event-triggered type to another UE.

For example, the CAM may include basic vehicle information including dynamic state information such as a direction and a speed, vehicle static data such as dimensions, an external lighting state, path details, and so on. For example, the UE may broadcast the CAM which may have a latency less than 100 ms. For example, when an unexpected incident occurs, such as breakage or an accident of a vehicle, the UE may generate the DENM and transmit the DENM to another UE. For example, all vehicles within the transmission range of the UE may receive the CAM and/or the DENM. In this case, the DENM may have priority over the CAM.

In relation to V2X communication, various V2X scenarios are presented in NR. For example, the V2X scenarios include vehicle platooning, advanced driving, extended sensors, and remote driving.

For example, vehicles may be dynamically grouped and travel together based on vehicle platooning. For example, to perform platoon operations based on vehicle platooning, the vehicles of the group may receive periodic data from a leading vehicle. For example, the vehicles of the group may widen or narrow their gaps based on the periodic data.

For example, a vehicle may be semi-automated or full-automated based on advanced driving. For example, each vehicle may adjust a trajectory or maneuvering based on data obtained from a nearby vehicle and/or a nearby logical entity. For example, each vehicle may also share a dividing intention with nearby vehicles.

Based on extended sensors, for example, raw or processed data obtained through local sensor or live video data may be exchanged between vehicles, logical entities, terminals of pedestrians and/or V2X application servers. Accordingly, a vehicle may perceive an advanced environment relative to an environment perceivable by its sensor.

Based on remote driving, for example, a remote driver or a V2X application may operate or control a remote vehicle on behalf of a person incapable of driving or in a dangerous environment. For example, when a path may be predicted as in public transportation, cloud computing-based driving may be used in operating or controlling the remote vehicle. For example, access to a cloud-based back-end service platform may also be used for remote driving.

A scheme of specifying service requirements for various V2X scenarios including vehicle platooning, advanced driving, extended sensors, and remote driving is under discussion in NR-based V2X communication.

[Disclosure]

[Technical Problem]

An object of the present disclosure is related to operation methods and devices for a serving base station, a target base station, a remote UE, and a relay UE related to the handover of the remote UE and the relay UE.

[Technical Solution]

In one embodiment, an operation method of a serving base station related to handover (HO) of a remote user equipment (UE) in a wireless communication system may include receiving, by the serving base station, a measurement result from the remote UE, selecting, by the serving base station, a target base station for the HO of the remote UE, transmitting, by the serving base station, an HO request message to the target base station, and transmitting, by the serving base station, an RRC reconfiguration with sync message received from the target base station to the remote UE. Based on that the serving base station determines to perform HO of the remote UE and a relay UE for the remote UE to the target base station, the RRC reconfiguration with sync message may contain information indicating that the remote UE should maintain a connection with the relay UE.

In one embodiment, a serving base station operating a wireless communication system may include at least one processor, and at least one computer memory operatively connected to the at least one processor and storing instructions that, when executed, cause the at least one processor to perform operations. The operations may include receiving a measurement result from a remote UE, selecting a target base station for HO of the remote UE, transmitting an HO request message to the target base station, and transmitting an RRC reconfiguration with sync message received from the target base station to the remote UE. Based on that the serving base station determines to perform HO of the remote UE and a relay UE for the remote UE to the target base station, the RRC reconfiguration with sync message may contain information indicating that the remote UE should maintain a connection with the relay UE.

In one embodiment, provided herein is a non-volatile computer-readable storage medium storing at least one computer program including instructions that, when executed by at least one processor, cause the at least one processor to perform operations for a serving base station. The operations may include receiving a measurement result from the remote UE, selecting a target base station for HO of the remote UE, transmitting an HO request message to the target base station, and transmitting an RRC reconfiguration with sync message received from the target base station to the remote UE. Based on that the serving base station determines to perform HO of the remote UE and a relay UE for the remote UE to the target base station, the RRC reconfiguration with sync message may contain information indicating that the remote UE should maintain a connection with the relay UE.

In one embodiment, an operation method of a remote UE related to HO of the remote UE in a wireless communication system may include transmitting, by the remote UE, a measurement result to a serving base station, receiving, by the remote UE, an RRC reconfiguration with sync message transmitted by a target base station from the serving base station, transmitting, by the remote UE, an RRC reconfiguration complete message to the target base station, and transmitting, by the remote UE, data to the target base station via the relay UE. Based on the remote UE and the relay UE being subjected to HO to the target base station, the RRC reconfiguration with sync message may contain information indicating that the remote UE should maintain a connection with the relay UE.

Based on that the serving base station determines to perform HO of the remote UE and a relay UE for the remote UE to the target base station, the RRC reconfiguration with sync message transmitted to the relay UE by the serving base station may contain information indicating that the relay UE should maintain a connection with the remote UE.

The HO request message may contain information indicating that the remote UE and the relay UE are in a multi-path relay relationship.

The serving base station may transmit information related to the relay UE to the target base station.

The information related to the relay UE may include a C-RNTI of the relay UE, SRC L2 ID, DST L2 ID, XNAP ID, an L2 ID Uu measurement result, a bearer, and bearer mapping information, the bearer and bearer mapping information being configured by the serving base station for a multi-path relay operation.

The relay UE may be one of a plurality of relay UEs connected to the remote UE.

The relay UE may be a UE determined by the serving base station to be subjected to the HO to the target base station along with the remote UE based on measurement results for the plurality of relay UEs.

The remote UE may communicate with at least one of another UE, a UE or base station related to a self-driving vehicle, or a network.

[Advantageous Effects]

According to an embodiment, an HO of a remote UE and a relay UE may be performed to the same target base station (and/or cell). Accordingly, the sidelink (SL) connection between the relay UE and the remote UE may be maintained, allowing for the quick configuration of multi-path operation even when the HO occurs.

[Description of Drawings]

The accompanying drawings, which are included to provide a further understanding of the disclosure and are incorporated in and constitute a part of this application, illustrate embodiment(s) of the disclosure and together with the description serve to explain the principle of the disclosure. In the drawings:

FIG. 1 is a diagram for explaining comparison between vehicle-to-everything (V2X) communication based on pre-new radio (NR) radio access technology (RAT) and V2X communication based on NR;
FIG. 2 illustrates the structure of a Long Term Evolution (LTE) system according to an embodiment of the present disclosure;
FIG. 3 illustrates radio protocol architectures for user and control planes according to an embodiment of the present disclosure;
FIG. 4 illustrates the structure of a new radio (NR) system according to an embodiment of the present disclosure;
FIG. 5 illustrates a functional division between a next generation radio access network (NG-RAN) and a fifth-generation core (5GC) according to an embodiment of the present disclosure;
FIG. 6 illustrates the structure of a radio frame of NR to which embodiment(s) are applicable;
FIG. 7 illustrates the structure of a slot in an NR frame according to an embodiment of the present disclosure;
FIG. 8 illustrates a radio protocol architecture for sidelink (SL) communication according to an embodiment of the present disclosure;
FIG. 9 illustrates a radio protocol architecture for SL communication according to an embodiment of the present disclosure;
FIG. 10 illustrates a synchronization source or synchronization reference of V2X according to an embodiment of the present disclosure;
FIG. 11 illustrates a procedure for a user equipment (UE) to perform V2X or SL communication depending on transmission modes according to an embodiment of the present disclosure.;
FIG. 12 illustrates a procedure for performing path switching by a UE according to an embodiment of the present disclosure;
FIG. 13 illustrates direct to indirect path switching;
FIG. 14 illustrates the handover;
FIG. 15 illustrates an embodiment; and
FIGS. 16 to 22 illustrate various devices to which the embodiment(s) are applicable.

[Best Mode]

In various embodiments of the present disclosure, "/" and "," should be interpreted as "and/or". For example, "A/B" may mean "A and/or B". Further, "A, B" may mean "A and/or B". Further, "A/B/C" may mean "at least one of A, B and/or C". Further, "A, B, C" may mean "at least one of A, B and/or C".

In various embodiments of the present disclosure, "or" should be interpreted as "and/or". For example, "A or B" may include "only A", "only B", and/or "both A and B". In other words, "or" should be interpreted as "additionally or alternatively".

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA), or the like. IEEE 802.16m is an evolution of IEEE 802.16e, offering backward compatibility with an IRRR 802.16e-based system. UTRA is a part of universal mobile telecommunications system (UMTS). 3rd generation partnership project (3GPP) long term evolution (LTE) is a part of evolved UMTS (E-UMTS) using evolved UTRA (E-UTRA). 3GPP LTE employs OFDMA for downlink (DL) and SC-FDMA for uplink (UL). LTE-advanced (LTE-A) is an evolution of 3GPP LTE.

A successor to LTE-A, 5th generation (5G) new radio access technology (NR) is a new clean-state mobile communication system characterized by high performance, low latency, and high availability. 5G NR may use all available spectral resources including a low frequency band below 1GHz, an intermediate frequency band between 1GHz and 10GHz, and a high frequency (millimeter) band of 24GHz or above.

While the following description is given mainly in the context of LTE-A or 5G NR for the clarity of description, the technical idea of an embodiment of the present disclosure is not limited thereto.

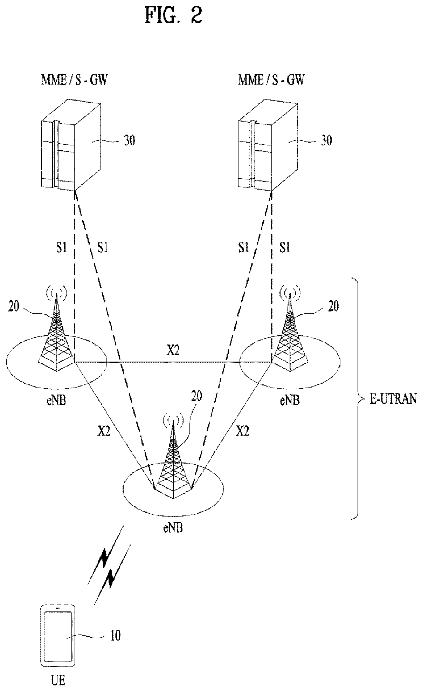

FIG. 2 illustrates the structure of an LTE system according to an embodiment of the present disclosure. This may also be called an evolved UMTS terrestrial radio access network (E-UTRAN) or LTE/LTE-A system.

Referring to FIG. 2, the E-UTRAN includes evolved Node Bs (eNBs) 20 which provide a control plane and a user plane to UEs 10. A UE 10 may be fixed or mobile, and may also be referred to as a mobile station (MS), user terminal (UT), subscriber station (SS), mobile terminal (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MMF interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

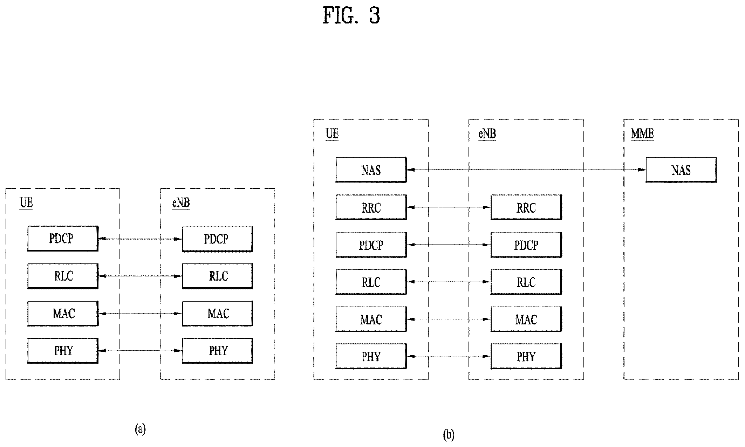

FIG. 3(a) illustrates a user-plane radio protocol architecture according to an embodiment of the disclosure.

FIG. 3(b) illustrates a control-plane radio protocol architecture according to an embodiment of the disclosure. A user plane is a protocol stack for user data transmission, and a control plane is a protocol stack for control signal transmission.

Referring to FIGS. 3(a) and 3(b), the PHY layer provides an information transfer service to its higher layer on physical channels. The PHY layer is connected to the medium access control (MAC) layer through transport channels and data is transferred between the MAC layer and the PHY layer on the transport channels. The transport channels are divided according to features with which data is transmitted via a radio interface.

Data is transmitted on physical channels between different PHY layers, that is, the PHY layers of a transmitter and a receiver. The physical channels may be modulated in orthogonal frequency division multiplexing (OFDM) and use time and frequencies as radio resources.

The MAC layer provides services to a higher layer, radio link control (RLC) on logical channels. The MAC layer provides a function of mapping from a plurality of logical channels to a plurality of transport channels. Further, the MAC layer provides a logical channel multiplexing function by mapping a plurality of logical channels to a single transport channel. A MAC sublayer provides a data transmission service on the logical channels.

The RLC layer performs concatenation, segmentation, and reassembly for RLC serving data units (SDUs). In order to guarantee various quality of service (QoS) requirements of each radio bearer (RB), the RLC layer provides three operation modes, transparent mode (TM), unacknowledged mode (UM), and acknowledged Mode (AM). An AM RLC provides error correction through automatic repeat request (ARQ).

The RRC layer is defined only in the control plane and controls logical channels, transport channels, and physical channels in relation to configuration, reconfiguration, and release of RBs. An RB refers to a logical path provided by L1 (the PHY layer) and L2 (the MAC layer, the RLC layer, and the packet data convergence protocol (PDCP) layer), for data transmission between the UE and the network.

The user-plane functions of the PDCP layer include user data transmission, header compression, and ciphering.

The control-plane functions of the PDCP layer include control-plane data transmission and ciphering/integrity protection.

RB establishment amounts to a process of defining radio protocol layers and channel features and configuring specific parameters and operation methods in order to provide a specific service. RBs may be classified into two types, signaling radio bearer (SRB) and data radio bearer (DRB). The SRB is used as a path in which an RRC message is transmitted on the control plane, whereas the DRB is used as a path in which user data is transmitted on the user plane.

Once an RRC connection is established between the RRC layer of the UE and the RRC layer of the E-UTRAN, the UE is placed in RRC_CONNECTED state, and otherwise, the UE is placed in RRC_IDLE state. In NR, RRC_INACTIVE state is additionally defined. A UE in the RRC_INACTIVE state may maintain a connection to a core network, while releasing a connection from an eNB.

DL transport channels carrying data from the network to the UE include a broadcast channel (BCH) on which system information is transmitted and a DL shared channel (DL SCH) on which user traffic or a control message is transmitted. Traffic or a control message of a DL multicast or broadcast service may be transmitted on the DL-SCH or a DL multicast channel (DL MCH). UL transport channels carrying data from the UE to the network include a random access channel (RACH) on which an initial control message is transmitted and an UL shared channel (UL SCH) on which user traffic or a control message is transmitted.

The logical channels which are above and mapped to the transport channels include a broadcast control channel (BCCH), a paging control channel (PCCH), a common control channel (CCCH), a multicast control channel (MCCH), and a multicast traffic channel (MTCH).

A physical channel includes a plurality of OFDM symbol in the time domain by a plurality of subcarriers in the frequency domain. One subframe includes a plurality of OFDM symbols in the time domain. An RB is a resource allocation unit defined by a plurality of OFDM symbols by a plurality of subcarriers. Further, each subframe may use specific subcarriers of specific OFDM symbols (e.g., the first OFDM symbol) in a corresponding subframe for a physical DL control channel (PDCCH), that is, an L1/L2 control channel. A transmission time interval (TTI) is a unit time for subframe transmission.

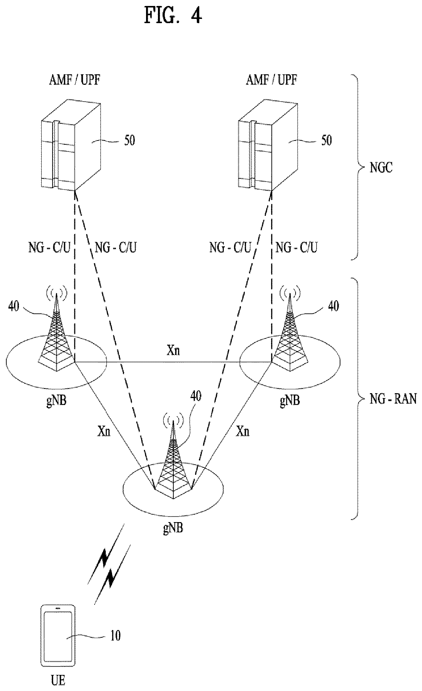

FIG. 4 illustrates the structure of an NR system according to an embodiment of the present disclosure.

Referring to FIG. 4, a next generation radio access network (NG-RAN) may include a next generation Node B (gNB) and/or an eNB, which provides user-plane and control-plane protocol termination to a UE. In FIG. 4, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

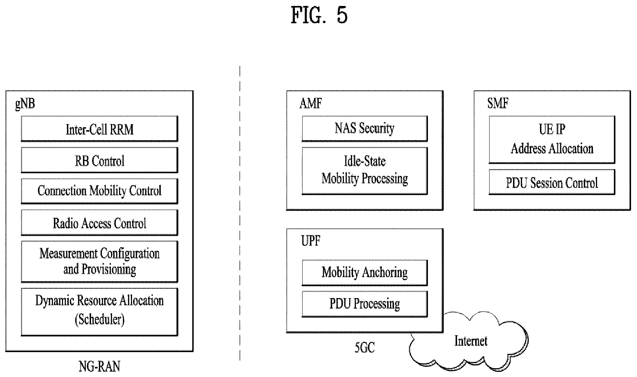

FIG. 5 illustrates functional split between the NG-RAN and the 5GC according to an embodiment of the present disclosure.

Referring to FIG. 5, a gNB may provide functions including inter-cell radio resource management (RRM), radio admission control, measurement configuration and provision, and dynamic resource allocation. The AMF may provide functions such as non-access stratum (NAS) security and idle-state mobility processing. The UPF may provide functions including mobility anchoring and protocol data unit (PDU) processing. A session management function (SMF) may provide functions including UE Internet protocol (IP) address allocation and PDU session control.

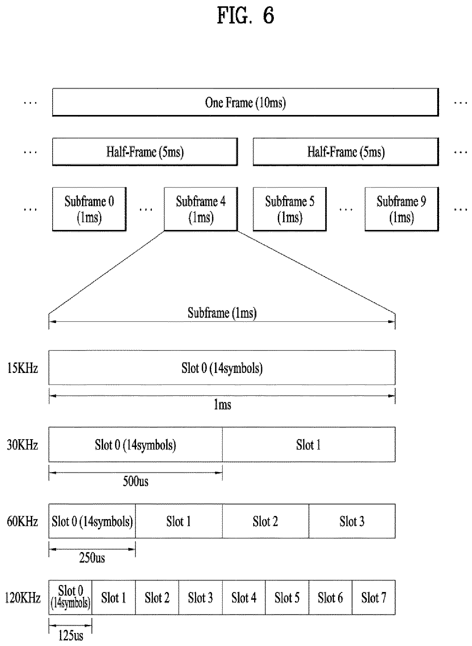

FIG. 6 illustrates a radio frame structure in NR, to which embodiment(s) of the present disclosure is applicable.

Referring to FIG. 6, a radio frame may be used for UL transmission and DL transmission in NR. A radio frame is 10ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

[Table 1] below lists the number of symbols per slot $N^{slot}_{symb}$, the number of slots per frame $N^{frame,u}_{slot}$, and the number of slots per subframe $N^{subframe,u}_{slot}$ according to an SCS configuration $\mu$ in the NCP case.

[Table 1]

| SCS (15*2u) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |

(continued)

| SCS (15*2u) | $N^{slot}_{symb}$ | $N^{frame,u}_{slot}$ | $N^{subframe,u}_{slot}$ |
|---|---|---|---|
| 240KHz (u=4) | 14 | 160 | 16 |

[Table 2] below lists the number of symbols per slot, the number of slots per frame, and the number of slots per subframe according to an SCS in the ECP case.

[Table 2]

| SCS (15*2^u) | $N^{slot}_{symb}$ | $N^{frame,u}_{slot}$ | $N^{subframe,u}_{slot}$ |
|---|---|---|---|
| 60KHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource including the same number of symbols (e.g., a subframe, slot, or TTI) (collectively referred to as a time unit (TU) for convenience) may be configured to be different for the aggregated cells.

In NR, various numerologies or SCSs may be supported to support various 5G services. For example, with an SCS of 15kHz, a wide area in traditional cellular bands may be supported, while with an SCS of 30kHz/60kHz, a dense urban area, a lower latency, and a wide carrier bandwidth may be supported. With an SCS of 60kHz or higher, a bandwidth larger than 24.25GHz may be supported to overcome phase noise.

An NR frequency band may be defined by two types of frequency ranges, FR1 and FR2. The numerals in each frequency range may be changed. For example, the two types of frequency ranges may be given in [Table 3]. In the NR system, FR1 may be a "sub 6GHz range" and FR2 may be an "above 6GHz range" called millimeter wave (mmW).

[Table 3]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As mentioned above, the numerals in a frequency range may be changed in the NR system. For example, FR1 may range from 410MHz to 7125MHz as listed in [Table 4]. That is, FR1 may include a frequency band of 6GHz (or 5850, 5900, and 5925MHz) or above. For example, the frequency band of 6GHz (or 5850, 5900, and 5925MHz) or above may include an unlicensed band. The unlicensed band may be used for various purposes, for example, vehicle communication (e.g., autonomous driving).

[Table 4]

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

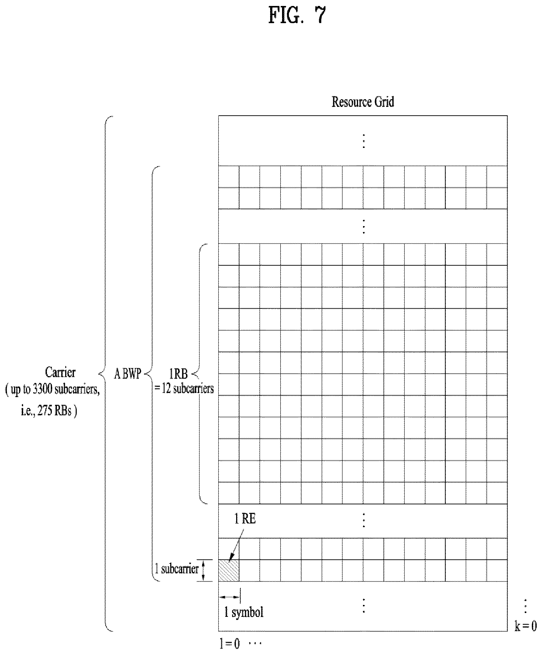

FIG. 7 illustrates a slot structure in an NR frame according to an embodiment of the present disclosure.

Referring to FIG. 7, a slot includes a plurality of symbols in the time domain. For example, one slot may include 14 symbols in an NCP case and 12 symbols in an ECP case. Alternatively, one slot may include 7 symbols in an NCP case and 6 symbols in an ECP case.

A carrier includes a plurality of subcarriers in the frequency domain. An RB may be defined by a plurality of (e.g., 12) consecutive subcarriers in the frequency domain. A bandwidth part (BWP) may be defined by a plurality of consecutive (physical) RBs ((P)RBs) in the frequency domain and correspond to one numerology (e.g., SCS, CP length, or the like). A carrier may include up to N (e.g., 5) BWPs. Data communication may be conducted in an activated BWP. Each element may be referred to as a resource element (RE) in a resource grid, to which one complex symbol may be mapped.

A radio interface between UEs or a radio interface between a UE and a network may include L1, L2, and L3. In various embodiments of the present disclosure, L1 may refer to the PHY layer. For example, L2 may refer to at least one of the MAC layer, the RLC layer, the PDCH layer, or the SDAP layer. For example, L3 may refer to the RRC layer.

Now, a description will be given of sidelink (SL) communication.

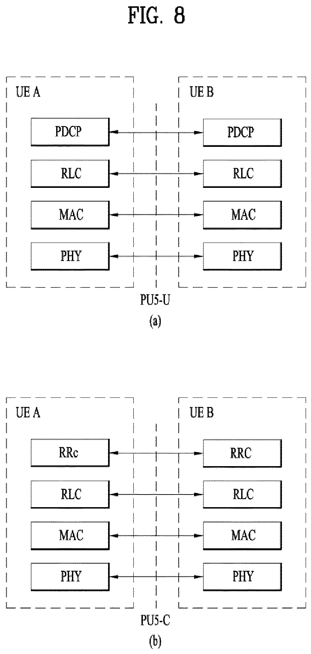

FIG. 8 illustrates a radio protocol architecture for SL communication according to an embodiment of the present disclosure. Specifically, FIG. 8(a) illustrates a user-plane protocol stack in LTE, and FIG. 8(b) illustrates a control-plane protocol stack in LTE.

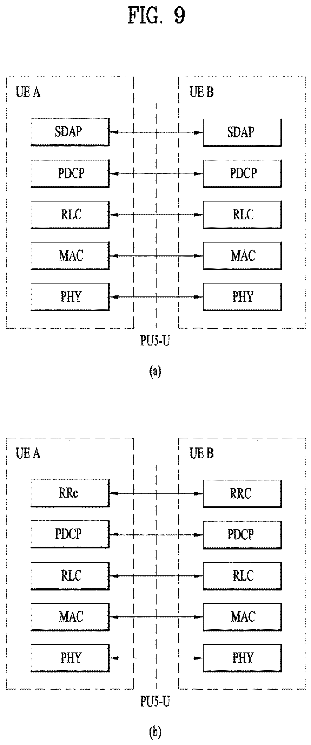

FIG. 9 illustrates a radio protocol architecture for SL communication according to an embodiment of the present disclosure. Specifically, FIG. 9(a) illustrates a user-plane protocol stack in NR, and FIG. 9(b) illustrates a control-plane protocol stack in NR.

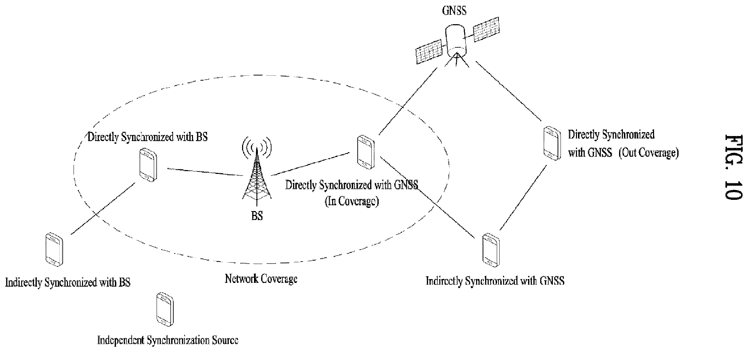

FIG. 10 illustrates a synchronization source or synchronization reference of V2X according to an embodiment of the present disclosure.

Referring to FIG. 10, in V2X, a UE may be directly synchronized with global navigation satellite systems (GNSS). Alternatively, the UE may be indirectly synchronized with the GNSS through another UE (within or out of network coverage). If the GNSS is configured as a synchronization source, the UE may calculate a direct frame number (DFN) and a subframe number based on a coordinated universal time (UTC) and a configured (or preconfigured) DFN offset.

Alternatively, a UE may be directly synchronized with a BS or may be synchronized with another UE that is synchronized in time/frequency with the BS. For example, the BS may be an eNB or a gNB. For example, when a UE is in network coverage, the UE may receive synchronization information provided by the BS and may be directly synchronized with the BS. Next, the UE may provide the synchronization information to another adjacent UE. If a timing of the BS is configured as a synchronization reference, the UE may follow a cell associated with a corresponding frequency (when the UE is in cell coverage in frequency) or a primary cell or a serving cell (when the UE is out of cell coverage in frequency), for synchronization and DL measurement.

The BS (e.g., serving cell) may provide a synchronization configuration for a carrier used for V2X/SL communication. In this case, the UE may conform to the synchronization configuration received from the BS. If the UE fails to detect any cell in the carrier used for V2X/SL communication and fails to receive the synchronization configuration from the serving cell, the UE may conform to a preset synchronization configuration.

Alternatively, the UE may be synchronized with another UE that has failed to directly or indirectly acquire the synchronization information from the BS or the GNSS. A synchronization source and a preference may be preconfigured for the UE. Alternatively, the synchronization source and the preference may be configured through a control message provided by the BS.

SL synchronization sources may be associated with synchronization priority levels. For example, a relationship between synchronization sources and synchronization priorities may be defined as shown in Table 5 or 6. Table 5 or 6 is merely an example, and the relationship between synchronization sources and synchronization priorities may be defined in various ways.

[Table 5]

| Priority level | GNSS-based synchronization | BS-based synchronization (eNB/gNB-based synchronization) |
|---|---|---|
| P0 | GNSS | BS |
| P1 | All UEs directly synchronized with GNSS | All UEs directly synchronized with BS |
| P2 | All UEs indirectly synchronized with GNSS | All UEs indirectly synchronized with BS |
| P3 | All other UEs | GNSS |
| P4 | N/A | All UEs directly synchronized with GNSS |
| P5 | N/A | All UEs indirectly synchronized with GNSS |
| P6 | N/A | All other UEs |

[Table 6]

| Priority level | GNSS-based synchronization | BS-based synchronization (eNB/gNB-based synchronization) |
|---|---|---|
| P0 | GNSS | BS |
| P1 | All UEs directly synchronized with GNSS | All UEs directly synchronized with BS |
| P2 | All UEs indirectly synchronized with GNSS | All UEs indirectly synchronized with GNSS |

(continued)

| Priority level | GNSS-based synchronization | BS-based synchronization (eNB/gNB-based synchronization) |
|---|---|---|
| P3 | BS | GNSS |
| P4 | All UEs directly synchronized with GNSS | All UEs directly synchronized with GNSS |
| P5 | All UEs indirectly synchronized with GNSS | All UEs indirectly synchronized with GNSS |
| P6 | Remaining UE(s) with low priority | Remaining UE(s) with low priority |

In Table 5 or 6, P0 may mean the highest priority, and P6 may mean the lowest priority. In Table 5 or 6, the BS may include at least one of a gNB or an eNB.

Whether to use GNSS-based synchronization or eNB/gNB-based synchronization may be (pre)configured. In a single-carrier operation, the UE may derive a transmission timing thereof from an available synchronization reference having the highest priority.

Hereinafter, a sidelink synchronization signal (SLSS) and synchronization information will be described.

As an SL-specific sequence, the SLSS may include a primary sidelink synchronization signal (PSSS) and a secondary sidelink synchronization signal (SSSS). The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, the UE may use the S-PSS to detect an initial signal and obtain synchronization. In addition, the UE may use the S-PSS and the S-SSS to obtain detailed synchronization and detect a synchronization signal ID.

A physical sidelink broadcast channel (PSBCH) may be a (broadcast) channel for transmitting default (system) information that the UE needs to know first before transmitting and receiving SL signals. For example, the default information may include information related to an SLSS, a duplex mode (DM), a time division duplex (TDD) UL/DL configuration, information related to a resource pool, an application type related to the SLSS, a subframe offset, broadcast information, etc. For example, for evaluation of PSBCH performance in NR V2X, the payload size of the PSBCH may be 56 bits including a CRC of 24 bits.

The S-PSS, S-SSS, and PSBCH may be included in a block format (e.g., SL synchronization signal (SS)/PSBCH block) supporting periodical transmission (hereinafter, the SL SS/PSBCH block is referred to as a sidelink synchronization signal block (S-SSB)). The S-SSB may have the same numerology (i.e., SCS and CP length) as that of a physical sidelink control channel (PSCCH)/physical sidelink shared channel (PSSCH) on a carrier, and the transmission bandwidth may exist within a configured (or preconfigured) SL BWP. For example, the S-SSB may have a bandwidth of 11 RBs. For example, the PSBCH may span 11 RBs. In addition, the frequency position of the S-SSB may be configured (or preconfigured). Therefore, the UE does not need to perform hypothesis detection on frequency to discover the S-SSB on the carrier.

The NR SL system may support a plurality of numerologies with different SCSs and/or different CP lengths. In this case, as the SCS increases, the length of a time resource used by a transmitting UE to transmit the S-SSB may decrease. Accordingly, the coverage of the S-SSB may be reduced. Therefore, in order to guarantee the coverage of the S-SSB, the transmitting UE may transmit one or more S-SSBs to a receiving UE within one S-SSB transmission period based on the SCS. For example, the number of S-SSBs that the transmitting UE transmits to the receiving UE within one S-SSB transmission period may be pre-configured or configured for the transmitting UE. For example, the S-SSB transmission period may be 160 ms. For example, an S-SSB transmission period of 160 ms may be supported for all SCSs.

For example, when the SCS is 15 kHz in FR1, the transmitting UE may transmit one or two S-SSBs to the receiving UE within one S-SSB transmission period. For example, when the SCS is 30 kHz in FR1, the transmitting UE may transmit one or two S-SSBs to the receiving UE within one S-SSB transmission period. For example, when the SCS is 60 kHz in FR1, the transmitting UE may transmit one, two, or four S-SSBs to the receiving UE within one S-SSB transmission period.

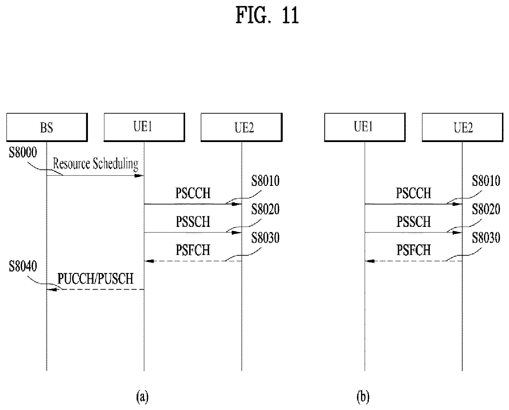

FIG. 11 illustrates a procedure of performing V2X or SL communication by a UE depending on a transmission mode according to an embodiment of the present disclosure. The embodiment of FIG. 11 may be combined with various embodiemnts of the present disclosure. In various embodiments of the present disclosure, a transmission mode may be referred to as a mode or a resource allocation mode. For the convenience of the following description, a transmission mode in LTE may be referred to as an LTE transmission mode, and a transmission mode in NR may be referred to as an NR resource allocation mode.

For example, FIG. 11(a) illustrates a UE operation related to LTE transmission mode 1 or LTE transmission mode 3. Alternatively, for example, FIG. 11(a) illustrates a UE operation related to NR resource allocation mode 1. For example, LTE transmission mode 1 may apply to general SL communication, and LTE transmission mode 3 may apply to V2X communication.

For example, FIG. 11(b) illustrates a UE operation related to LTE transmission mode 2 or LTE transmission mode 4. Alternatively, for example, FIG. 11(b) illustrates a UE operation related to NR resource allocation mode 2.

Referring to FIG. 11 (a), in LTE transmission mode 1, LTE transmission mode 3, or NR resource allocation mode 1, a BS may schedule an SL resource to be used for SL transmission by a UE. For example, in step S8000, the BS may transmit information related to an SL resource and/or information related to a UE resource to a first UE. For example, the UL resource may include a PUCCH resource and/or a PUSCH resource. For example, the UL resource may be a resource to report SL HARQ feedback to the BS.

For example, the first UE may receive information related to a Dynamic Grant (DG) resource and/or information related to a Configured Grant (CG) resource from the BS. For example, the CG resource may include a CG type 1 resource or a CG type 2 resource. In the present specification, the DG resource may be a resource configured/allocated by the BS to the first UE in Downlink Control Information (DCI). In the present specification, the CG resource may be a (periodic) resource configured/allocated by the BS to the first UE in DCI and/or an RRC message. For example, for the CG type 1 resource, the BS may transmit an RRC message including information related to the CG resource to the first UE. For example, for the CG type 2 resource, the BS may transmit an RRC message including information related to the CG resource to the first UE, and the BS may transmit DCI for activation or release of the CG resource to the first UE.

In step S8010, the first UE may transmit a PSCCH (e.g., Sidelink Control Information (SCI) or 1st-stage SCI) to a second UE based on the resource scheduling. In step S8020, the first UE may transmit a PSSCH (e.g., 2nd-stage SCI, MAC PDU, data, etc.) related to the PSCCH to the second UE. In step S8030, the first UE may receive a PSFCH related to the PSCCH/PSSCH from the second UE. For example, HARQ feedback information (e.g., NACK information or ACK information) may be received from the second UE over the PSFCH. In step S8040, the first UE may transmit/report HARQ feedback information to the BS over a PUCCH or PUSCH. For example, the HARQ feedback information reported to the BS may include information generated by the first UE based on HARQ feedback information received from the second UE. For example, the HARQ feedback information reported to the BS may include information generated by the first UE based on a preset rule. For example, the DCI may be a DCI for scheduling of SL. For example, the format of the DCI may include DCI format 3_0 or DCI format 3_1. Table 7 shows one example of DCI for scheduling of SL.

[Table 7]

| 7.3.1.4.1 Format 3_0 |
|---|
| DCI format 3_0 is used for scheduling of NR PSCCH and NR PSSCH in one cell. |
| The following information is transmitted by means of the DCI format 3_0 with CRC scrambled by SL-RNTI or SL-CS-RNTI: |
| - Resource pool index - $\lceil \log_2 I \rceil$ bits, where $I$ is the number of resource pools for transmission configured by the higher layer parameter *sl-TxPoolScheduling.* |
| - Time gap - 3 bits determined by higher layer parameter *sl-DCI-ToSL-Trans,* as defined in clause 8.1.2.1 of [6, TS 38.214] |
| - HARQ process number - 4 bits. |
| - New data indicator - 1 bit. |
| - Lowest index of the subchannel allocation to the initial transmission - $\lceil \log_2 (N_{\text{subChannel}}^{\text{SL}}) \rceil$ bits as defined in clause 8.1.2.2 of [6, TS 38.214] |
| - SCI format 1-A fields according to clause 8.3.1.1: |
| - Frequency resource assignment. |
| - Time resource assignment. |
| - PSFCH-to-HARQ feedback timing indicator - $\lceil \log_2 N_{\text{fb\_timing}} \rceil$ bits, where $N_{\text{fb\_timing}}$ is the number of entries in the higher layer parameter *sl-PSFCH-ToPUCCH,* as defined in clause 16.5 of [5, TS 38.213] |
| - PUCCH resource indicator - 3 bits as defined in clause 16.5 of [5, TS 38.213]. |
| - Configuration index - 0 bit if the UE is not configured to monitor DCI format 3_0 with CRC scrambled by SL-CS-RNTI; otherwise 3 bits as defined in clause 8.1.2 of [6, TS 38.214]. If the UE is configured to monitor DCI format 3_0 with CRC scrambled by SL-CS-RNTI, this field is reserved for DCI format 3_0 with CRC scrambled by SL-RNTI. |
| - Counter sidelink assignment index - 2 bits |

(continued)

- 2 bits as defined in clause 16.5.2 of [5, TS 38.213] if the UE is configured with *pdsch-HARQ-ACK-Codebook = dynamic*

- 2 bits as defined in clause 16.5.1 of [5, TS 38.213] if the UE is configured with *pdsch-HARQ-ACK-Codebook = semi-static*

- Padding bits, if required

If multiple transmit resource pools are provided in *sl-TxPoolScheduling,* zeros shall be appended to the DCI format 3_0 until the payload size is equal to the size of a DCI format 3_0 given by a configuration of the transmit resource pool resulting in the largest number of information bits for DCI format 3_0.

If the UE is configured to monitor DCI format 3_1 and the number of information bits in DCI format 3_0 is less than the payload of DCI format 3_1, zeros shall be appended to DCI format 3_0 until the payload size equals that of DCI format 3_1.

7.3.1.4.2 Format 3_1

DCI format 3_1 is used for scheduling of LTE PSCCH and LTE PSSCH in one cell. The following information is transmitted by means of the DCI format 3_1 with CRC scrambled by SL Semi-Persistent Scheduling V-RNTI:

- Timing offset - 3 bits determined by higher layer parameter *sl-TimeOffsetEUTRA-List,* as defined in clause 16.6 of [5, TS 38.213]

- Carrier indicator -3 bits as defined in 5.3.3.1.9A of [11, TS 36.212].

- Lowest index of the subchannel allocation to the initial transmission - $\left\lceil \log_2(N_{\text{subchannel}}^{\text{SL}}) \right\rceil$ bits as defined in 5.3.3.1.9A of [11, TS 36.212].

- Frequency resource location of initial transmission and retransmission, as defined in 5.3.3.1.9A of [11, TS 36.212]

- Time gap between initial transmission and retransmission, as defined in 5.3.3.1.9A of [11, TS 36.212]

- SL index - 2 bits as defined in 5.3.3.1.9A of [11, TS 36.212]

- SL SPS configuration index - 3 bits as defined in clause 5.3.3.1.9A of [11, TS 36.212].

- Activation/release indication - 1 bit as defined in clause 5.3.3.1.9A of [11, TS 36.212].

Referring to FIG. 11(b), in an LTE transmission mode 2, an LTE transmission mode 4, or an NR resource allocation mode 2, a UE may determine an SL transmission resource within an SL resource configured by a BS/network or a preconfigured SL resource. For example, the configured SL resource or the preconfigured SL resource may be a resource pool. For example, the UE may autonomously select or schedule resources for SL transmission. For example, the UE may perform SL communication by selecting a resource by itself within a configured resource pool. For example, the UE may perform sensing and resource (re)selection procedures to select a resource by itself within a selection window. For example, the sensing may be performed in unit of a sub-channel. For example, in the step S8010, the first UE having self-selected a resource in the resource pool may transmit PSCCH (e.g., Side Link Control Information (SCI) or 1st-stage SCI) to the second UE using the resource. In the step S8020, the first UE may transmit PSSCH (e.g., 2nd-stage SCI, MAC PDU, data, etc.) related to the PSCCH to the second UE. In the step S8030, the first UE may receive PSFCH related to the PSCCH/PSSCH from the second UE.

Referring to FIG. 11 (a) or FIG. 11 (b), for example, the first UE may transmit the SCI to the second UE on the PSCCH. Alternatively, for example, the first UE may transmit two consecutive SCIs (e.g., two-stage SCI) to the second UE on the PSCCH and/or PSSCH. In this case, the second UE may decode the two consecutive SCIs (e.g., two-stage SCI) to receive the PSSCH from the first UE. In the present specification, the SCI transmitted on the PSCCH may be referred to as a 1st SCI, a 1st-stage SCI, or a 1st-stage SCI format, and the SCI transmitted on the PSSCH may be referred to as a 2nd SCI, a 2nd SCI, a 2nd-stage SCI format. For example, the 1st-stage SCI format may include SCI format 1-A, and the 2nd-stage SCI format may include SCI format 2-A and/or SCI format 2-B. Table 8 shows one example of a 1st-stage SCI format.

[Table 8]

8.3.1.1 SCI format 1-A

SCI format 1-A is used for the scheduling of PSSCH and 2nd-stage-SCI on PSSCH The following information is transmitted by means of the SCI format 1-A:

- Priority - 3 bits as specified in clause 5.4.3.3 of [12, TS 23.287] and clause 5.22.1.3.1 of [8, TS 38.321]. Value '000' of Priority field corresponds to priority value '1', value '001' of Priority field corresponds to priority value '2', and so on.

$$-\left\lceil \log_2\left(\frac{N_{\text{subChannel}}^{\text{SL}}\left(N_{\text{subChannel}}^{\text{SL}}+1\right)}{2}\right)\right\rceil$$

$$\left\lceil \log_2\left(\frac{N_{\text{subChannel}}^{\text{SL}}\left(N_{\text{subChannel}}^{\text{SL}}+1\right)\left(2N_{\text{subChannel}}^{\text{SL}}+1\right)}{6}\right)\right\rceil$$

- Frequency resource assignment bits when the value of the higher layer parameter *sl-MaxNumPerReserve* is configured to 2; otherwise bits when the value of the higher layer parameter *sl-MaxNumPerReserve* is configured to 3, as defined in clause 8.1.5 of [6, TS 38.214].

- Time resource assignment - 5 bits when the value of the higher layer parameter *sl-MaxNumPerReserve* is configured to 2; otherwise 9 bits when the value of the higher layer parameter *sl-MaxNumPerReserve* is configured to 3, as defined in clause 8.1.5 of [6, TS 38.214].

- Resource reservation period - $\left\lceil \log_2 N_{\text{rsv\_period}} \right\rceil$ bits as defined in clause 16.4 of [5, TS 38.213], where $N_{\text{rsv\_period}}$ is the number of entries in the higher layer parameter *sl-ResourceReservePeriodList,* if higher layer parameter *sl-MultiReserveResource* is configured; 0 bit otherwise.

- DMRS pattern - $\left\lceil \log_2 N_{\text{pattern}} \right\rceil$ bits as defined in clause 8.4.1.1.2 of [4, TS 38.211], where $N_{\text{pattern}}$ is the number of DMRS patterns configured by higher layer parameter *sl-PSSCH-DMRS-TimePatternList.*

- 2nd-stage SCI format - 2 bits as defined in Table 8.3.1.1-1.

- Beta_offset indicator - 2 bits as provided by higher layer parameter *sl-BetaOffsets2ndSCI* and Table 8.3.1.1-2.

- Number of DMRS port - 1 bit as defined in Table 8.3.1.1-3.

- Modulation and coding scheme - 5 bits as defined in clause 8.1.3 of [6, TS 38.214].

- Additional MCS table indicator - as defined in clause 8.1.3.1 of [6, TS 38.214]: 1 bit if one MCS table is configured by higher layer parameter *sl-Additional-MCS-Table;* 2 bits if two MCS tables are configured by higher layer parameter *sl-Additional-MCS-Table;* 0 bit otherwise.

- PSFCH overhead indication - 1 bit as defined clause 8.1.3.2 of [6, TS 38.214] if higher layer parameter *sl-PSFCH-Period* = 2 or 4; 0 bit otherwise.

- Reserved - a number of bits as determined by higher layer parameter *sl-NumReservedBits,* with value set to zero.

Table 9 shows exemplary 2nd-stage SCI formats.

[Table 9]

8.4 Sidelink control information on PSSCH

SCI carried on PSSCH is a 2nd-stage SCI, which transports sidelink scheduling information.

8.4.1 2nd-stage SCI formats

The fields defined in each of the 2nd-stage SCI formats below are mapped to the information bits $a_0$ to $a_{A-1}$ as follows:

Each field is mapped in the order in which it appears in the description, with the first field mapped to the lowest order information bit $a_0$ and each successive field mapped to higher order information bits. The most significant bit of each field is mapped to the lowest order information bit for that field, e.g. the most significant bit of the first field is mapped to $a_0$. 8.4.1.1 SCI format 2-A

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:

- HARQ process number - 4 bits.

- New data indicator - 1 bit.

- Redundancy version - 2 bits as defined in Table 7.3.1.1.1-2.

- Source ID - 8 bits as defined in clause 8.1 of [6, TS 38.214].

- Destination ID - 16 bits as defined in clause 8.1 of [6, TS 38.214].

- HARQ feedback enabled/disabled indicator - 1 bit as defined in clause 16.3 of [5, TS 38.213].

- Cast type indicator - 2 bits as defined in Table 8.4.1.1-1 and in clause 8.1 of [6, TS 38.214].

(continued)

| - CSI request - 1 bit as defined in clause 8.2.1 of [6, TS 38.214] and in clause 8.1 of [6, TS 38.214]. |
| --- |

Referring to FIG. 11(a) or FIG. 11(b), in step S8030, a first UE may receive a PSFCH based on Table 10. For example, the first UE and a second UE may determine a PSFCH resource based on Table 10, and the second UE may transmit HARQ feedback to the first UE on the PSFCH resource.

[Table 10]

16.3 UE procedure for reporting HARQ-ACK on sidelink

A UE can be indicated by an SCI format scheduling a PSSCH reception to transmit a PSFCH with HARQ-ACK information in response to the PSSCH reception. The UE provides HARQ-ACK information that includes ACK or NACK, or only NACK.

A UE can be provided, by *sl-PSFCH-Period,* a number of slots in a resource pool for a period of PSFCH transmission occasion resources. If the number is zero, PSFCH transmissions from the UE in the resource pool are disabled.

A UE expects that a slot $t'^{SL}_k \ (0 \le k < T'_{max})$ has a PSFCH transmission occasion resource if $k \bmod N^{\text{PSFCH}}_{\text{PSSCH}} = 0$, where $t'^{SL}_k$ is defined in [6, TS 38.214], and $T'_{max}$ is a number of slots that belong to the resource pool within 10240 msec according to [6, TS 38.214], and $N^{\text{PSFCH}}_{\text{PSSCH}}$ is provided by *sl-PSFCH-Period.*

A UE may be indicated by higher layers to not transmit a PSFCH in response to a PSSCH reception [11, TS 38.321].

If a UE receives a PSSCH in a resource pool and the HARQ feedback enabled/disabled indicator field in an associated SCI format 2-A or a SCI format 2-B has value 1 [5, TS 38.212], the UE provides the HARQ-ACK information in a PSFCH transmission in the resource pool. The UE transmits the PSFCH in a first slot that includes PSFCH resources and is at least a number of slots, provided by *sl-MinTimeGapPSFCH,* of the resource pool after a last slot of the PSSCH reception.

A UE is provided by *sl-PSFCH-RB-Set* a set of $M^{\text{PSFCH}}_{\text{PRB, set}}$ PRBs in a resource pool for PSFCH transmission in a PRB of the resource pool. For a number of $N_{\text{subch}}$ sub-channels for the resource pool, provided by *sl-NumSubchannel,* and a number of PSSCH slots associated with a PSFCH slot that is less than or equal to $N^{\text{PSFCH}}_{\text{PSSCH}}$, the UE allocates the $\left[ (i + j \cdot N^{\text{PSFCH}}_{\text{PSSCH}}) \cdot \ M^{\text{PSFCH}}_{\text{subch, slot}}, (i + 1 + j \cdot N^{\text{PSFCH}}_{\text{PSSCH}}) \cdot M^{\text{PSFCH}}_{\text{subch, slot}} - 1 \right]$ PRBs from the $M^{\text{PSFCH}}_{\text{PRB, set}}$ PRBs to slot i among the PSSCH slots associated with the PSFCH slot and sub-channel *j*, where $M^{\text{PSFCH}}_{\text{subch, slot}} = M^{\text{PSFCH}}_{\text{PRB, set}} / (N_{\text{subch}} \cdot N^{\text{PSFCH}}_{\text{PSSCH}}), \quad 0 \le i < N^{\text{PSFCH}}_{\text{PSSCH}}$, and the allocation starts in an ascending order of i and continues in an ascending order of *j*. The UE expects that $M^{\text{PSFCH}}_{\text{PRB, set}}$ is a multiple of $N_{\text{subch}} \cdot N^{\text{PSFCH}}_{\text{PSSCH}}$.

The second OFDM symbol *l'* of PSFCH transmission in a slot is defined as *l' = sl-StartSymbol + sl-LengthSymbols - 2* .

A UE determines a number of PSFCH resources available for multiplexing HARQ-ACK information in a PSFCH transmission as $R^{\text{PSFCH}}_{\text{PRB, CS}} = N^{\text{PSFCH}}_{\text{type}} \cdot M^{\text{PSFCH}}_{\text{subch, slot}} \cdot N^{\text{PSFCH}}_{\text{CS}}$ where $N^{\text{PSFCH}}_{\text{CS}}$ is a number of cyclic shift pairs for the resource pool provided by *sl-NumMuxCS-Pair* and, based on an indication by *sl-PSFCH CandidateResourceType,*

- if *sl-PSFCH-CandidateResourceType* is configured as *startSubCH,* $N^{\text{PSFCH}}_{\text{type}} = 1$ and the $M^{\text{PSFCH}}_{\text{subch, slot}}$ PRBs are associated with the starting sub-channel of the corresponding PSSCH;

(continued)

- if *sl-PSFCH-CandidateResourceType* is configured as *allocSubCH,* $N_{\text{type}}^{\text{PSFCH}} = N_{\text{subch}}^{\text{PSSCH}}$ and the

$N_{\text{subch}}^{\text{PSSCH}} \cdot M_{\text{subch, slot}}^{\text{PSFCH}}$ PRBs are associated with the $N_{\text{subch}}^{\text{PSSCH}}$ sub-channels of the corresponding PSSCH. The PSFCH resources are first indexed according to an ascending order of the PRB index, from the

$N_{\text{type}}^{\text{PSFCH}} \cdot M_{\text{subch, slot}}^{\text{PSFCH}}$ PRBs, and then according to an ascending order of the cyclic shift pair index from the

$N_{\text{CS}}^{\text{PSFCH}}$ cyclic shift pairs.

A UE determines an index of a PSFCH resource for a PSFCH transmission in response to a PSSCH reception as

$(P_{\text{ID}} + M_{\text{ID}}) mod R_{\text{PRB, CS}}^{\text{PSFCH}}$ where $P_{\text{ID}}$ is a physical layer source ID provided by SCI format 2-A or 2-B [5, TS 38.212] scheduling the PSSCH reception, and $M_{\text{ID}}$ is the identity of the UE receiving the PSSCH as indicated by higher layers if the UE detects a SCI format 2-A with Cast type indicator field value of "01"; otherwise, $M_{\text{ID}}$ is zero.

A UE determines a $m_0$ value, for computing a value of cyclic shift $\alpha$ [4, TS 38.211], from a cyclic shift pair index corresponding to a PSFCH resource index and from $N_{\text{CS}}^{\text{PSFCH}}$ using Table 16.3-1.

Referring to FIG. 11(a), in step S8040, the first UE may transmit SL HARQ feedback to the BS over a PUCCH and/or PUSCH based on Table 11.

[Table 11]

16.5 UE procedure for reporting HARQ-ACK on uplink

A UE can be provided PUCCH resources or PUSCH resources [12, TS 38.331] to report HARQ-ACK information that the UE generates based on HARQ-ACK information that the
UE obtains from PSFCH receptions, or from absence of PSFCH receptions. The UE reports HARQ-ACK information on the primary cell of the PUCCH group, as described in clause 9, of the cell where the UE monitors PDCCH for detection of DCI format 3_0.

For SL configured grant Type 1 or Type 2 PSSCH transmissions by a UE within a time period provided by *sl-PeriodCG,* the UE generates one HARQ-ACK information bit in response to the PSFCH receptions to multiplex in a PUCCH transmission occasion that is after a last time resource, in a set of time resources.

For PSSCH transmissions scheduled by a DCI format 3_0, a UE generates HARQ-ACK information in response to PSFCH receptions to multiplex in a PUCCH transmission occasion that is after a last time resource in a set of time resources provided by the DCI format 3_0.

From a number of PSFCH reception occasions, the UE generates HARQ-ACK information to report in a PUCCH or PUSCH transmission. The UE can be indicated by a SCI format to perform one of the following and the UE constructs a HARQ-ACK codeword with HARQ-ACK information, when applicable

- for one or more PSFCH reception occasions associated with SCI format 2-A with Cast type indicator field value of "10"

- generate HARQ-ACK information with same value as a value of HARQ-ACK information the UE determines from the last PSFCH reception from the number of PSFCH reception occasions corresponding to PSSCH transmissions or, if the UE determines that a PSFCH is not received at the last PSFCH reception occasion and ACK is not received in any of previous PSFCH reception occasions, generate NACK

- for one or more PSFCH reception occasions associated with SCI format 2-A with Cast type indicator field value of "01"

- generate ACK if the UE determines ACK from at least one PSFCH reception occasion, from the number of PSFCH reception occasions corresponding to PSSCH transmissions, in PSFCH resources corresponding to every identity $M_{\text{ID}}$ of the UEs that the UE expects to receive the PSSCH, as described in clause 16.3; otherwise, generate NACK

- for one or more PSFCH reception occasions associated with SCI format 2-B or SCI format 2-A with Cast type indicator field value of "11"

(continued)

| |
|---|
| - generate ACK when the UE determines absence of PSFCH reception for the last PSFCH reception occasion from the number of PSFCH reception occasions corresponding to PSSCH transmissions; otherwise, generate NACK After a UE transmits PSSCHs and receives PSFCHs in corresponding PSFCH resource occasions, the priority value of HARQ-ACK information is same as the priority value of the PSSCH transmissions that is associated with the PSFCH reception occasions providing the HARQ-ACK information. |
| The UE generates a NACK when, due to prioritization, as described in clause 16.2.4, the UE does not receive PSFCH in any PSFCH reception occasion associated with a PSSCH transmission in a resource provided by a DCI format 3_0 or, for a configured grant, in a resource provided in a single period and for which the UE is provided a PUCCH resource to report HARQ-ACK information. The priority value of the NACK is same as the priority value of the PSSCH transmission. |
| The UE generates a NACK when, due to prioritization as described in clause 16.2.4, the UE does not transmit a PSSCH in any of the resources provided by a DCI format 3_0 or, for a configured grant, in any of the resources provided in a single period and for which the UE is provided a PUCCH resource to report HARQ-ACK information. The priority value of the NACK is same as the priority value of the PSSCH that was not transmitted due to prioritization. |
| The UE generates an ACK if the UE does not transmit a PSCCH with a SCI format 1-A scheduling a PSSCH in any of the resources provided by a configured grant in a single period and for which the UE is provided a PUCCH resource to report HARQ-ACK information. The priority value of the ACK is same as the largest priority value among the possible priority values for the configured grant. |

Table 12 below shows details of selection and reselection of an SL relay UE defined in 3GPP TS 36.331. The contents of Table 12 are used as the prior art of the present disclosure, and related necessary details may be found in 3GPP TS 36.331.

[Table 12]

| |
|---|
| 5.10.11.4 Selection and reselection of sidelink relay UE |
| A UE capable of sidelink remote UE operation that is configured by upper layers to search for a sidelink relay UE shall: |
| if out of coverage on the frequency used for sidelink communication, as defined in TS 36.304 [4], clause 11.4; or |
| if the serving frequency is used for sidelink communication and the RSRP measurement of the cell on which the UE camps (RRC _IDLE)/ the PCell (RRC_CONNECTED) is below *threshHigh* within *remoteUE-Config :* |
| 2> search for candidate sidelink relay UEs, in accordance with TS 36.133 [16] |
| 2> when evaluating the one or more detected sidelink relay UEs, apply layer 3 filtering as specified in 5.5.3.2 across measurements that concern the same ProSe Relay UE ID and using the *filterCoefficient* in *SystemInformationBlockType19* (in coverage) or the preconfigured *filterCoefficient* as defined in 9.3(out of coverage), before using the SD-RSRP measurement results; |
| NOTE 1: The details of the interaction with upper layers are up to UE implementation. |
| 2> if the UE does not have a selected sidelink relay UE: |
| 3> select a candidate sidelink relay UE which SD-RSRP exceeds *q-RxLevMin* included in either *reselectionInfoIC* (in coverage) or *reselectionInfoOoC* (out of coverage) by *minHyst;* |
| 2> else if SD-RSRP of the currently selected sidelink relay UE is below *q-RxLevMin* included in either *reselectionInfoIC* (in coverage) or *reselectionInfoOoC* (out of coverage); or if upper layers indicate not to use the currently selected sidelink relay: (i.e. sidelink relay UE reselection): |
| 3> select a candidate sidelink relay UE which SD-RSRP exceeds *q-RxLevMin* included in either *reselectionInfoIC* (in coverage) or *reselectionInfoOoC* (out of coverage) by *minHyst;* |
| 2> else if the UE did not detect any candidate sidelink relay UE which SD-RSRP exceeds *q-RxLevMin* included in either *reselectionInfoIC* (in coverage) or *reselectionInfoOoC* (out of coverage) by *minHyst:* |
| 3> consider no sidelink relay UE to be selected; |
| NOTE 2: The UE may perform sidelink relay UE reselection in a manner resulting in selection of the sidelink relay UE, amongst all candidate sidelink relay UEs meeting higher layer criteria, that has the best radio link quality. Further details, including interaction with upper layers, are up to UE implementation. |
| 5.10.11.5 Sidelink remote UE threshold conditions |
| A UE capable of sidelink remote UE operation shall: |

(continued)

> 1> if the threshold conditions specified in this clause were not met:
>
> 2> if *threshHigh* is not included in *remoteUE-Config* within *SystemInformationBlockType19*; or
>
> 2> if *threshHigh* is included in *remoteUE-Config* within *SystemInformationBlockType19;* and the RSRP measurement of the PCell, or the cell on which the UE camps, is below *threshHigh* by *hystMax* (also included within *remoteUE-Config):*
>
> 3> consider the threshold conditions to be met (entry); else:
>
> 2> if *threshHigh* is included in *remoteUE-Config* within *SystemInformationBlockType19;* and the RSRP measurement of the PCell, or the cell on which the UE camps, is above *threshHigh* (also included within *remoteUE-Config*):
>
> 3> consider the threshold conditions not to be met (leave);

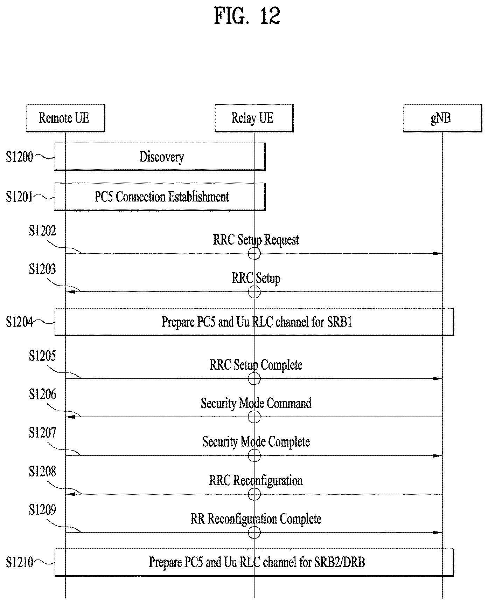

FIG. 12 shows connection management captured in the TR document (3GPP TR 38.836) related to Rel-17 NR SL and a procedure for path switching from direct to indirect. A remote UE needs to establish its own PDU session/DRB with a network before user plane data transmission.

A PC5 unicast link establishment procedure in terms of PC5-RRC of Rel-16 NR V2X may be reused to establish a secure unicast link for L2 UE-to-network relaying between the remote UE and a relay UE before the remote UE establishes a Uu RRC connection with the network through the relay UE.

For both in-coverage and out-of-coverage, when the remote UE initiates a first RRC message for connection establishment with a gNB, a PC5 L2 configuration for transmission between the remote UE and the UE-to-network relay UE may be based on an RLC/MAC configuration defined in the standard. Establishment of Uu SRB1/SRB2 and DRB of the remote UE complies with a legacy Uu configuration procedure for L2 UE-to-network relay.

A high-level connection establishment procedure shown in FIG. 12 is applied to the L2 UE-to-network relay.

In operation S1200, the remote and relay UEs may perform a discovery procedure and establish a PC5-RRC connection in operation S1201 based on the existing Rel-16 procedure.

In operation S1202, the remote UE may transmit a first RRC message (i.e., RRCSetupRequest) for connection establishment with the gNB through the relay UE by using a default L2 configuration of PC5. The gNB responds to the remote UE with an RRCSetup message (S1203). Transmission of RRCSetup to the remote UE uses a default configuration of PC5. When the relay UE does not start in RRC_CONNECTED, the relay UE needs to perform its own connection setup upon receiving a message about the default L2 configuration of PC5. In this operation, details for the relay UE to transmit the RRCSetupRequest/RRCSetup message to the remote UE may be discussed in stage WI.

In operation S1204, the gNB and the relay UE perform a relay channel setup procedure via Uu. According to the configuration of the gNB, the relay/remote UE establishes an RLC channel for relaying SRB1 with the remote UE via PC5. In this operation, a relay channel for SRB1 is prepared.

In operation S1205, the remote UE SRB1 message (e.g., RRCSetupComplete message) is transmitted to the gNB via the relay UE by using the SRB1 relay channel via PC5. The remote UE performs RRC connection via Uu.

In operation S1206, the remote UE and the gNB configure security according to a legacy procedure, and a security message is transmitted through the relay UE.

In operation S1210, the gNB configures an additional RLC channel between the gNB and the relay UE for traffic relay. According to the configuration of the gNB, the relay/remote UE configures an RLC channel between the remote UE and the relay UE for traffic relay. The gNB transmits RRCReconfiguration to the remote UE through the relay UE to configure relay SRB2/DRB. The remote UE transmits RRCReconfigurationComplete in response to the gNB through the relay UE.

For L2 UE-to-network relay in addition to connection establishment procedure:

-    The RRC reconfiguration and RRC disconnection procedures may reuse legacy RRC procedures with the message content/configuration design left to stage WI.

-    RRC connection reconfiguration and RRC connection resumption procedures may reuse the existing RRC procedure as a baseline by considering the connection establishment procedure of the above L2 UE-to-network relay to handle a relay-specific part along with message content/configuration design. The message content/configuration may be defined later.

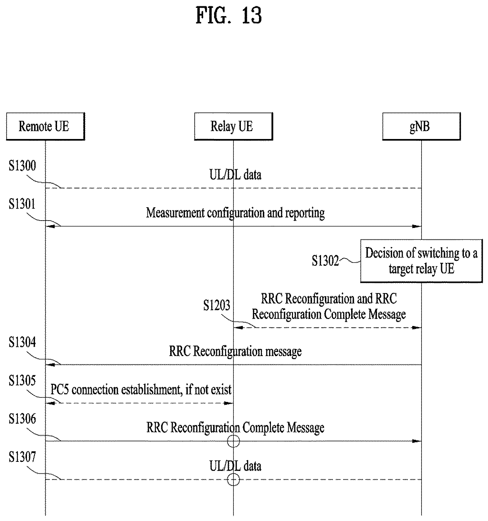

FIG. 13 illustrates direct to indirect path switching. For service continuity of L2 UE-to-network relay, the procedure in FIG. 13 may be used when a remote UE switches to an indirect relay UE.

Referring to FIG. 13, in operation S1301, the remote UE measures/discovers a candidate relay UE and then reports one or several candidate relay UEs. The remote UE may filter out an appropriate relay UE that meets higher layer standard during reporting. The report may include the ID and SL RSRP information of the relay UE, and in this case, the PC5 measurement details may be determined later.

In operation S1302, the gNB determines to switch to a target relay UE and the target (re)configuration is optionally transmitted to the relay UE.

In operation S1304, the RRC reconfiguration message for the remote UE may include the ID of the target relay UE, target Uu, and PC5 configuration.

In operation S1305, the remote UE establishes a PC5 connection with the target relay UE when the connection is not established.

In operation S1306, the remote UE feeds back RRCReconfigurationComplete to the gNB via a target path by using the target configuration provided in RRCReconfiguration.

In operation S1307, a data path is switched.

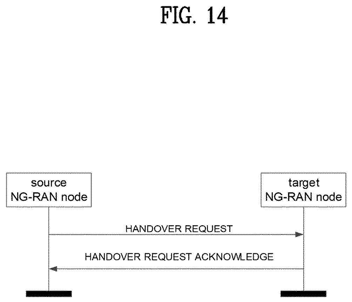

The descriptions in Tables 13 to 18 are from the 3GPP TS 38.423 standard document related to handover and serve as the prior art of the present disclosure. In Table 14, FIG. 8.2.1.2-1 corresponds to FIG. 14. For the other details, refer to the 3GPP TS 38.423 standard document.

[Table13]

| **8.2.1 Handover Preparation** |
|---|
| **8.2.1.1 General**<br>This procedure is used to establish necessary resources in an NG-RAN node for an incoming handover. If the procedure concerns a conditional handover, parallel transactions are allowed. Possible parallel requests are identified by the target cell ID when the source UE AP IDs are the same.<br>The procedure uses UE-associated signalling. |
| **8.2.1.2 Successful Operation**<br>The source NG-RAN node initiates the procedure by sending the HANDOVER REQUEST message to the target NG-RAN node. When the source NG-RAN node sends the HANDOVER REQUEST message, it shall start the timer TXn$_{RELOCprep}$.<br>If the *Conditional Handover Information Request* IE is contained in the HANDOVER REQUEST message, the target NG-RAN node shall consider that the request concerns a conditional handover and shall include the *Conditional Handover Information Acknowledge* IE in the HANDOVER REQUEST ACKNOWLEDGE message.<br>If the *Target NG-RAN node UE XnAP ID* IE is contained in the *Conditional Handover Information Request* IE included in the HANDOVER REQUEST message, then the target NG-RAN node shall remove the existing prepared conditional HO identified by the *Target NG-RAN node UE XnAP ID* IE and the *Target Cell Global ID* IE. It is up to the implementation of the target NG-RAN node when to remove the HO information.<br>Upon reception of the HANDOVER REQUEST ACKNOWLEDGE message, the source NG-RAN node shall stop the timer TXn$_{RELOCprep}$ and terminate the Handover Preparation procedure. If the procedure was initiated for an immediate handover, the source NG-RAN node shall start the timer TXn$_{RELOCoverall}$. The source NG-RAN node is then defined to have a Prepared Handover for that Xn UE-associated signalling.<br>For each E-RAB ID IE included in the QoS Flow To Be Setup List IE in the HANDOVER REQUEST message, the target NG-RAN node shall, if supported, store the content of the IE in the UE context and use it for subsequent inter-system handover.<br>If the Masked IMEISV IE is contained in the HANDOVER REQUEST message the target NG-RAN node shall, if supported, use it to determine the characteristics of the UE for subsequent handling.<br>At reception of the HANDOVER REQUEST message the target NG-RAN node shall prepare the configuration of the AS security relation between the UE and the target NG-RAN node by using the information in the UE Security Capabilities IE and the AS Security Information IE in the UE Context Information IE, as specified in TS 33.501 [28].<br>Upon reception of the PDU Session Resource Setup List IE, contained in the HANDOVER REQUEST message, the target NG-RAN node shall behave the same as specified in TS 38.413 [5] for the PDU Session Resource Setup procedure. The target NG-RAN node shall report in the HANDOVER REQUEST ACKNOWLEDGE message the successful establishment of the result for all the requested PDU session resources. When the target NG-RAN node reports the unsuccessful establishment of a PDU session resource, the cause value should be precise enough to enable the source NG-RAN node to know the reason for the unsuccessful establishment.<br>For each PDU session if the PDU Session Aggregate Maximum Bit Rate IE is included in the PDU Session Resources To Be Setup List IE contained in the HANDOVER REQUEST message, the target NG-RAN node shall store the received PDU Session Aggregate Maximum Bit Rate in the UE context and use it when enforcing traffic policing for Non-GBR QoS flows for the concerned UE as specified in TS 23.501 [7]. |

(continued)

**8.2.1.2 Successful Operation**

For each QoS flow for which the source NG-RAN node proposes to perform forwarding of downlink data, the source NG-RAN node shall include the DL Forwarding IE set to "DL

forwarding proposed" within the Data Forwarding and Offloading Info from source NG-RAN node IE in the PDU Session Resources To Be Setup List IE in the HANDOVER REQUEST message. The source NG-RAN node shall include the DL Forwarding IE set to "DL forwarding proposed" for all the QoS flows mapped to a DRB, if it requests a DAPS handover for that DRB. For each PDU session that the target NG-RAN node decides to admit the data forwarding for at least one QoS flow, the target NG-RAN node includes the PDU Session level DL data forwarding GTP-U Tunnel Endpoint IE within the Data Forwarding Info from target NG-RAN node IE in the PDU Session Resource Admitted Info IE contained in the PDU Session Resources Admitted List IE in the HANDOVER REQUEST ACKNOWLEDGE message.

[Table14]

For each QoS flow for which the source NG-RAN node has not yet received the SDAP end marker packet if QoS flow re-mapping happened before handover, the source NG-RAN node shall include the UL Forwarding Proposal IE within the Data Forwarding and Offloading Info from source NG-RAN node IE in the HANDOVER REQUEST message, and if the target NG-RAN node decides to admit uplink data forwarding for at least one QoS flow, the target NG-RAN node may include the PDU Session Level UL Data Forwarding UP TNL Information IE in the Data Forwarding Info from target NG-RAN node IE in the PDU Session Resources Admitted Item IE contained in the PDU Session Resources Admitted List IE in the HANDOVER REQUEST ACKNOWLEDGE message to indicate that it accepts the uplink data forwarding.

For each PDU session resource successfully setup at the target NG-RAN, the target NG-RAN node may allocate resources for additional Xn-U PDU session resource GTP-U tunnels, indicated in the Secondary Data Forwarding Info from target NG-RAN node List IE.

For each PDU session in the HANDOVER REQUEST message, if the Alternative QoS Parameters Set List IE is included in the GBR QoS Flow Information IE in the PDU Session Resources To Be Setup List IE, the target NG-RAN node may accept the setup of the involved QoS flow when notification control has been enabled if the requested QoS parameters set or at least one of the alternative QoS parameters sets can be fulfilled at the time of handover as specified in TS 23.501 [7]. In case the target NG-RAN node accepts the handover fulfilling one of the alternative QoS parameters it shall indicate the alternative QoS parameters set which it can currently fulfil in the Current QoS Parameters Set Index IE within the PDU Session Resources Admitted List IE of the HANDOVER REQUEST ACKNOWLEDGE message while setting the QoS parameters towards the UE according to the requested QoS parameters set as specified in TS 23.501 [7].

For each DRB for which the source NG-RAN node proposes to perform forwarding of downlink data, the source NG-RAN node shall include the DRB ID IE and the mapped QoS Flows List IE within the Source DRB to QoS Flow Mapping List IE contained in the PDU Session Resources To Be Setup List IE in the HANDOVER REQUEST message. The source NG-RAN node may include the QoS Flow Mapping Indication IE in the Source DRB to QoS Flow Mapping List IE to indicate that only the uplink or downlink QoS flow is mapped to the DRB. If the target NG-RAN node decides to use the same DRB configuration and to map the same QoS flows as the source NG-RAN node, the target NG-RAN node includes the DL Forwarding GTP Tunnel Endpoint IE within the Data Forwarding Response DRB List IE in the HANDOVER REQUEST ACKNOWLEDGE message to indicate that it accepts the proposed forwarding of downlink data for this DRB.

The target NG-RAN node may additionally include the Redundant DL Forwarding UP TNL Information IE if at least one of the QoS flow mapped to the DRB is eligible to the redundant transmission feature as indicated in the Redundant QoS Flow Indicator IE within

the PDU Session Resource To Be Setup List IE received in the HANDOVER REQUEST message for the QoS flow.

If the HANDOVER REQUEST ACKNOWLEDGE message contains the UL Forwarding GTP Tunnel Endpoint IE for a given DRB in the Data Forwarding Response DRB List IE within Data Forwarding Info from target NG-RAN node IE in the PDU Session Resources Admitted List IE and the source NG-RAN node accepts the data forwarding proposed by the target NG-RAN node, the source NG-RAN node shall perform forwarding of uplink data for the DRB.

(continued)

If the HANDOVER REQUEST includes PDU session resources for PDU sessions associated to S-NSSAIs not supported by target NG-RAN, the target NG-RAN node shall reject such PDU session resources. In this case, and if at least one PDU Session Resource To Be Setup Item IE is admitted, the target NG-RAN node shall send the HANDOVER REQUEST ACKNOWLEDGE message including the PDU Session Resources Not Admitted List IE listing corresponding PDU sessions rejected at the target NG-RAN.

If the Mobility Restriction List IE is
- contained in the HANDOVER REQUEST message, the target NG-RAN node shall
  - store the information received in the Mobility Restriction List IE in the UE context;
  - use this information to determine a target for the UE during subsequent mobility action for which the NG-RAN node provides information about the target of the mobility action towards the UE, except when one of the PDU sessions has a particular ARP value (TS 23.501 [7]) in which case the information shall not apply;
  - use this information to select a proper SCG during dual connectivity operation.
  - use this information to select proper RNA(s) for the UE when moving the UE to RRC_INACTIVE.
- not contained in the HANDOVER REQUEST message, the target NG-RAN node shall
  - consider that no roaming and no access restriction apply to the UE.

[Table15]

If the Trace Activation IE is included in the HANDOVER REQUEST message the target NG-RAN node shall, if supported, initiate the requested trace function as specified in TS 32.422 [23].

If the Index to RAT/Frequency Selection Priority IE is contained in the HANDOVER REQUEST message, the target NG-RAN node shall store this information and use it as defined in TS 23.501 [7].

If the UE Context Reference at the S-NG-RAN IE is contained in the HANDOVER REQUEST message the target NG-RAN node may use it as specified in TS 37.340 [8]. In this case, the source NG-RAN node may expect the target NG-RAN node to include the UE Context Kept Indicator IE set to "True" in the HANDOVER REQUEST ACKNOWLEDGE message, which shall use this information as specified in TS 37.340 [8].

For each PDU session, if the Network Instance IE is included in the PDU Session Resource To Be Setup List IE and the Common Network Instance IE is not present, the target NG-RAN node shall, if supported, use it when selecting transport network resource as specified in TS 23.501 [7].

Redundant transmission:
- For each PDU session, if the *Redundant UL NG-U UP TNL Information at UPF* IE is included in the *PDU Session Resource To Be Setup List* IE, the target NG-RAN node shall, if supported, use it as the uplink termination point for the user plane data for the redundant transmission for the concerned PDU session.
- For each PDU session, if the *Additional Redundant UL NG-U UP TNL Information at UPF List* IE is included in the *PDU Session Resource To Be Setup List* IE, the target NG-RAN node shall, if supported, use them as the uplink termination points for the user plane data for the redundant transmission for the concerned PDU session.
- For each PDU session, if the *Redundant Common Network Instance* IE is included in the *PDU Session Resource To Be Setup List* IE, the target NG-RAN node shall, if supported, use it when selecting transport network resource for the redundant transmission as specified in TS 23.501 [7].
- For each PDU session, if the *Redundant PDU Session Information* IE is included in the *PDU Session Resource To Be Setup List* IE contained in the HANDOVER REQUEST message, the target NG-RAN node shall, if supported, store the received information in the UE context and set up the redundant user plane for the concerned PDU session, as specified in TS 23.501 [7]. If the *PDU Session Pair ID* IE is included in the *Redundant PDU Session Information* IE, the target NG-RAN node may store and use it to identify the paired PDU sessions.

If the TSC Traffic Characteristics IE is included in the QoS Flows To Be Setup List in the PDU Session Resource To Be Setup List IE, the target NG-RAN node shall, if supported, use it as specified in TS 23.501 [7].

For each PDU session, if the Common Network Instance IE is included in the PDU Session Resource To Be Setup List IE or in the Additional UL NG-U UP TNL Information at UPF List IE, or in the Additional Redundant UL NG-U UP TNL Information at UPF List IE, the target NG-RAN node shall, if supported, use it when selecting transport network resource for the concerned NG-U transport bearer as specified in TS 23.501 [7].

(continued)

For each PDU session for which the Security Indication IE is included in the PDU Session Resource To Be Setup List IE and the Integrity Protection Indication IE or Confidentiality Protection Indication IE is set to "required", the target NG-RAN node shall perform user plane integrity protection or ciphering, respectively. If the NG-RAN node is not able to perform the user plane integrity protection or ciphering, it shall reject the setup of the PDU Session Resources with an appropriate cause value.

If the NG-RAN node is an ng-eNB, it shall reject all PDU sessions for which the Integrity Protection Indication IE is set to "required".

For each PDU session for which the Security Indication IE is included in the PDU Session Resource To Be Setup List IE and the Integrity Protection Indication IE or the Confidentiality Protection Indication IE is set to "preferred", the target NG-RAN node should, if supported, perform user plane integrity protection or ciphering, respectively and shall notify the SMF whether it succeeded the user plane integrity protection or ciphering or not for the concerned security policy.

For each PDU session for which the Maximum Integrity Protected Data Rate IE is included in the Security Indication IE in the PDU Session Resources To Be Setup List IE, the NG-RAN node shall store the respective information and, if integrity protection is to be performed for the PDU session, it shall enforce the traffic corresponding to the received Maximum Integrity Protected Data Rate IE, for the concerned PDU session and concerned UE, as specified in TS 23.501 [7].

[Table16]

For each PDU session for which the Security Indication IE is included in the PDU Session Resource To Be Setup List IE and the Integrity Protection Indication IE or Confidentiality Protection Indication IE is set to "not needed", the target NG-RAN node shall not perform user plane integrity protection or ciphering, respectively, for the concerned PDU session.

For each PDU session, if the Additional UL NG-U UP TNL Information List IE is included in the PDU Session Resources To Be Setup List IE contained in the HANDOVER REQUEST message, the target NG-RAN node may forward the UP transport layer information to the target S-NG-RAN node as the uplink termination point for the user plane data for this PDU session split in different tunnel.

If the Location Reporting Information IE is included in the HANDOVER REQUEST message, then the target NG-RAN node should initiate the requested location reporting functionality as defined in TS 38.413 [5].

Upon reception of UE History Information IE in the HANDOVER REQUEST message, the target NG-RAN node shall collect the information defined as mandatory in the UE History Information IE and shall, if supported, collect the information defined as optional in the UE History Information IE, for as long as the UE stays in one of its cells, and store the collected information to be used for future handover preparations.

If the Trace Activation IE is included in the HANDOVER REQUEST message which includes

- the *MDT Activation* IE set to "Immediate MDT and Trace", then the target NG-RAN node shall if supported, initiate the requested trace session and MDT session as described in TS 32.422 [23].

- the *MDT Activation* IE set to "Immediate MDT Only" or "Logged MDT only", the target NG-RAN node shall, if supported, initiate the requested MDT session as described in TS 32.422 [23] and the target NG-RAN node shall ignore the *Interfaces To Trace* IE, and the *Trace Depth* IE.

- the *MDT Location Information* IE, within the *MDT Configuration* IE, the target NG-RAN node shall, if supported, store this information and take it into account in the requested MDT session.

- the *MDT Activation* IE set to "Immediate MDT Only" or "Logged MDT only", and if the *Signalling based MDT PLMN List* IE is included in the *MDT Configuration* IE, the target NG-RAN node may use it to propagate the MDT Configuration as described in TS 37.320 [43].

- the *Bluetooth Measurement Configuration* IE, within the *MDT Configuration* IE, the target NG-RAN node shall, if supported, take it into account for MDT Configuration as described in TS 37.320 [43].

- the *WLAN Measurement Configuration* IE, within the *MDT Configuration* IE, the target NG-RAN node shall, if supported, take it into account for MDT Configuration as described in TS 37.320 [43].

- the *Sensor Measurement Configuration* IE, within the *MDT Configuration* IE, the target NG-RAN node shall take it into account for MDT Configuration as described in TS 37.320 [43].

- the *MDT Configuration* IE and if the target NG-RAN node is a gNB receiving a *HDT Configuration-EUTRA* IE, or the target NG-RAN node is a ng-eNB receiving a *MDT Configuration-NR* IE, the target NG-RAN node shall store it as part of the UE context, and use it as described in TS 37.320 [43].

(continued)

| |
|---|
| If the Management Based MDT PLMN List IE is contained in the HANDOVER REQUEST message, the target NG-RAN node shall, if supported, store the received information in the UE context, and use this information to allow subsequent selection of the UE for management based MDT defined in TS 32.422 [23]. |
| If the HANDOVER REQUEST message includes the Management Based MDT PLMN List IE, the target NG-RAN node shall, if supported, store it in the UE context, and take it into account if it includes information regarding the PLMN serving the UE in the target NG-RAN node. |
| If the Mobility Information IE is provided in the HANDOVER REQUEST message, the target NG-RAN node shall, if supported, store this information. The target NG-RAN shall, if supported, store the C-RNTI assigned at the source cell as received in the HANDOVER REQUEST message. |
| Upon reception of the UE History Information from the UE IE in the HANDOVER REQUEST message, the target NG-RAN node shall, if supported, store the collected information and use it for future handover preparations. |
| For each QoS flow which has been successfully established in the target NG-RAN node, if the QoS Monitoring Request IE was included in the QoS Flow Level QoS Parameters IE contained in the HANDOVER REQUEST message, the target NG-RAN node shall store this information, and shall, if supported, perform delay measurement and QoS monitoring, as specified in TS 23.501 [7]. If the QoS Monitoring Reporting Frequency IE was included in the QoS Flow Level QoS Parameters IE contained in the HANDOVER REQUEST message, the target NG-RAN node shall store this information, and shall, if supported, use it for RAN part delay reporting. |

[Table17]

| |
|---|
| If the 5GC Mobility Restriction List Container IE is included in the HANDOVER REQUEST message, the target NG-RAN node shall, if supported, store this information in the UE context and use it as specified in TS 38.300 [9]. V2X:<br>    - If the *NR V2X Services Authorized* IE is included in the HANDOVER REQUEST message and it contains one or more IEs set to "authorized", the target NG-RAN node shall, if supported, consider that the UE is authorized for the relevant service(s).<br>    - If the *LTE V2X Services Authorized* IE is included in the HANDOVER REQUEST message and it contains one or more IEs set to "authorized", the target NG-RAN node shall, if supported, consider that the UE is authorized for the relevant service(s).<br>    - If the *NR UE Sidelink Aggregate Maximum Bit Rate* IE is included in the HANDOVER REQUEST message, the target NG-RAN node shall, if supported, use the received value for the concerned UE's sidelink communication in network scheduled mode for NR V2X services.<br>    - If the *LTE UE Sidelink Aggregate Maximum Bit Rate* IE is included in the HANDOVER REQUEST message, the target NG-RAN node shall, if supported, use the received value for the concerned UE's sidelink communication in network scheduled mode for LTE V2X services.<br>5G ProSe:<br>    - If the *5G ProSe Authorized* IE is included in the HANDOVER REQUEST message and it contains one or more IEs set to "authorized", the target NG-RAN node shall, if supported, consider that the UE is authorized for the relevant service(s).<br>    - If the *5G ProSe UE PC5 Aggregate Maximum Bit Rate* IE is included in the HANDOVER REQUEST message, the target NG-RAN node shall, if supported, use the received value for the concerned UE's sidelink communication in network scheduled mode for 5G ProSe services.<br>    - If the *5G ProSe PC5 QoS Parameters* IE is included in the HANDOVER REQUEST message, the target NG-RAN node shall, if supported, use it as defined in TS 23.304 [48].<br>If the PC5 QoS Parameters IE is included in the HANDOVER REQUEST message, the target NG-RAN node shall, if supported, use it as defined in TS 23.287 [38].<br>If the DAPS Request Information IE is included for a given DRB in the HANDOVER REQUEST message, the target NG-RAN node shall consider that the request concerns a DAPS handover for that DRB, as described in TS 38.300 [9]. Accordingly, the target NG-RAN node shall include the DAPS Response Information IE in the HANDOVER REQUEST ACKNOWLEDGE message.<br>If the Maximum Number of CHO Preparations IE is included in the Conditional Handover Information Acknowledge IE contained in the HANDOVER REQUEST ACKNOWLEDGE message, then the source NG-RAN node should not prepare more candidate target cells for a CHO for the same UE towards the target NG-RAN node than the number indicated in the IE. |

(continued)

| |
|---|
| If the Estimated Arrival Probability IE is contained in the Conditional Handover Information Request IE included in the HANDOVER REQUEST message, then the target NG-RAN node may use the information to allocate necessary resources for the incoming CHO. |
| If the IAB Node Indication IE is contained in the HANDOVER REQUEST message, the target NG-RAN node shall, if supported, consider that the handover is for an IAB node. In addition: |
|     - If the *No PDU Session Indication* IE is contained in the HANDOVER REQUEST message, the target NG-RAN node shall, if supported, consider the UE as an IAB-node which does not have any PDU sessions activated, and ignore the *PDU Session Resources To Be Setup List* IE, and shall not take any action with respect to PDU session setup. Subsequently, the source NG-RAN node shall, if supported, ignore the *PDU Session Resources Admitted To Be Added List* IE in the HANDOVER REQUEST ACKNOWLEDGE message. |

[Table18]

| |
|---|
| If the UE Radio Capability ID IE is contained in the HANDOVER REQUEST message, the target NG-RAN node shall, if supported, store this information in the UE context and use it as defined in TS 23.501 [7] and TS 23.502 [13]. |
| If for a given QoS Flow the Source DL Forwarding IP Address IE is included within the Data Forwarding and Offloading Info from source NG-RAN node IE in the PDU Session Resources To Be Setup List IE contained in the HANDOVER REQUEST message, the target NG-RAN node shall, if supported, store this information and use it as part of its ACL functionality configuration actions, if such ACL functionality is deployed. |
| If the MBS Session Information List IE is contained in the HANDOVER REQUEST message, the target NG-RAN node shall, if supported, establish MBS session resources as specified in TS 23.247 [46] and TS 38.300 [9], if applicable. |
| If the HANDOVER REQUEST message includes the MBS Area Session ID IE, the target NG-RAN, if supported, shall use this information as an indication from which MBS Area Session ID the UE is handed over. For each MBS session for which the Active MBS Session Information IE is included in the MBS Session Information Item List IE, the target NG-RAN shall, if supported, use this information to setup respective MBS Session Resources. The target NG-RAN node shall, if supported, consider that the MBS sessions for which the Active MBS Session Information IE is not included are inactive. |
| If the HANDOVER REQUEST ACKNOWLEDGE message contains in the MBS Session Information Response List IE the MBS Data Forwarding Response Info IE that the source NG-RAN node shall use the information for forwarding MBS traffic to the target NG-RAN node. |
| If the MBS Session Associated Information List IE is included in the PDU Session Resources To Be Setup List IE in the HANDOVER REQUEST message, the target NG-RAN node shall, if supported, use the information contained in the Associated QoS Flows Information List IE as specified in TS 23.247 [46]. |
| For each MRB indicated in the MBS Mapping and Data Forwarding Request Info from source NG-RAN node IE, the target NG-RAN node shall use the MRB ID IE and, if included, the MRB Progress Information IE which includes the highest PDCP SN of the packet which has already been delivered to the UE for the MRB, to decide whether to apply data forwarding for that MRB and to establish respective resources. |
| The source NG-RAN shall, for each MRB in the MBS Data Forwarding Response Info from target NG-RAN node IE in the HANDOVER REQUEST ACKNOWLEDGE message, start data forwarding to the indicated DL Forwarding UP TNL Information. If the MRB Progress Information IE is included the source NG-RAN node may use the information to determine when to stop data forwarding. |
| If the Time Synchronisation Assistance Information IE is contained in the HANDOVER REQUEST message, the target NG-RAN node shall, if supported, store this information in the UE context and use it as defined in TS 23.501 [7]. |
| If the QMC Configuration Information IE is contained in the HANDOVER REQUEST message, the target NG-RAN node shall, if supported, take it into account for QoE measurements handling, as described in TS 38.300 [9]. |
| If the UE Slice-Maximum Bit Rate List IE is contained in HANDOVER REQUEST message, the target NG-RAN node shall, if supported, store the received UE Slice Maximum Bit Rate List in the UE context, and use the received UE Slice Maximum Bit Rate value for each S-NSSAI for the concerned UE as specified in TS 23.501 [7]. Interaction with SN Status Transfer procedure: |

(continued)

| If the UE Context Kept Indicator IE set to "True" and the DRBs transferred to MN IE are included in the HANDOVER REQUEST ACKNOWLEDGE message, the source NG-RAN node shall, if supported, include the uplink/-downlink PDCP SN and HFN status received from the S-NG-RAN node in the SN Status Transfer procedure towards the target NG-RAN node, as specified in TS 37.340 [8]. |
| --- |

Based on Tables 13 to 18, the typical HO process for a general UE is described below. The UE reports the Uu link measurement results (the Uu link signal strength of its serving cell and the Uu link signal strength of neighboring cells) to the BS. The BS then selects a target cell based on the measurement results reported by the UE. The serving BS (serving gNB) may send a HO request to the target BS (hereafter referred to as the target gNB), to which the target cell belongs. If the target BS permits the HO, it transmits an RRCReconfiguration (with Sync) message for the HO through the serving gNB.

Table 19 below corresponds to the prior art of the present disclosure, titled "New Rel-18 WID on NR sidelink relay enhancements."

[Table19]

| 3. Study the benefit and potential solutions for multi-path support to enhance reliability and throughput (e.g., by switching among or utilizing the multiple paths simultaneously) in the following scenarios [RAN2, RAN3]:<br><br>    A. A UE is connected to the same gNB using one direct path and one indirect path via 1) Layer-2 UE-to-Network relay, or 2) via another UE (where the UE-UE inter-connection is assumed to be ideal), where the solutions for 1) are to be reused for 2) without precluding the possibility of excluding a part of the solutions which is unnecessary for the operation for 2).<br><br>Note 3A: Study on the benefit and potential solutions are to be completed in RAN#98 which will decide whether/-how to start the normative work.<br><br>Note 3B: UE-to-Network relay in scenario 1 reuses the Rel-17 solution as the baseline.<br><br>Note 3C: Support of Layer-3 UE-to-Network relay in multi-path scenario is assumed to have no RAN impact and the work and solutions are subject to SA2 to progress. |
| --- |

The relay operations being prepared in 3GPP NR Rel-18 may allow the remote UE to activate both a direct path and an indirect path via the relay UE. The connection between the remote UE and the relay UE may be either an SL or an ideal link.

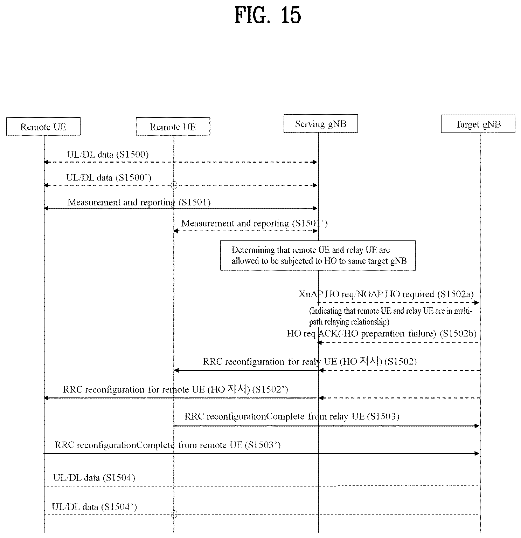

In one embodiment related to the handover (HO) of the remote UE, the serving gNB may receive a measurement result from the remote UE (S1501 in FIG. 15). The serving gNB may select a target gNB for the HO of the remote UE. The serving gNB may transmit an HO request message to the target gNB (S1502a). The serving gNB may transmit an RRC reconfiguration with sync message, received from the target gNB, to the remote UE (S1502).

Here, based on that the serving gNB determines to perform HO of both the remote UE and the relay UE for the remote UE to the target gNB, the RRC reconfiguration with sync message may include information indicating that the remote UE should maintain the connection with the relay UE. Similarly, based on that the serving gNB determines to perform HO of both the remote UE and the relay UE for the remote UE to the target gNB, the RRC reconfiguration with sync transmitted to the relay UE may include information indicating the relay UE should maintain the connection with the remote UE.

In other words, in the case where the serving gNB determines to perform HO of both the remote UE and the relay UE to the same target gNB, and/or the target gNB allows for the HO, the remote UE and relay UE may be instructed to maintain their pre-established sidelink connection. More specifically, when the target gNB allows both the remote UE and relay UE to be subjected to an HO to the target gNB (by transmitting an ACK for the HO request of the serving gNB), the target gNB may transmit a reconfiguration with sync message (including HO-related configuration) to each of the remote UE and relay UE. In the existing Rel-17 SL U2N relay operation, when the relay UE performs an HO, it transmits a notification message to the remote UE. Upon receiving this message, the remote UE may either release or maintain the SL connection with the relay UE (depending on the remote UE implementation). However, in the case where both the remote UE and the relay UE are allowed to perform an HO to the same target gNB, the relay UE should not transmit a notification message to the remote UE even when performing the HO.

Therefore, the reconfiguration with sync message delivered to the relay UE by the target gNB (via the service gNB) may contain an indication to maintain the SL connection with the current remote UE. Similarly, the reconfiguration with sync message delivered to the remote UE may contain an indication to maintain the SL connection with the current relay UE. Upon receiving the reconfiguration with sync message containing the indication, the remote UE/relay UE may maintain the current SL connection, assuming that their peer relay UE/remote UE has also received the command of HO to the same target gNB (and/or cell).

The HO request message may contain information indicating that the remote UE and the relay UE are in a multi-path relay relationship. There may be a case where both the remote UE and the relay UE are triggered to perform measurement and reporting, and the serving gNB determines, based on the measurement report results of the remote UE and the relay UE, that both may perform an HO to the same target gNB. In that case, the serving gNB may make a request for HO of the remote UE and the relay UE to the target gNB and indicate that the two UEs are in a multi-path relay relationship.

The serving gNB may deliver information related to the relay UE to the target gNB. The information related to the relay UE include C-RNTI of the relay UE, SRC (source) L2 ID, DST (destination) L2 ID, XNAP ID, L2 ID Uu measurement result, and a bearer and bearer mapping information configured by the serving gNB for the multi-path relay operation. More specifically, the serving gNB may deliver the information related to the current relay UE along with the HO request of the remote UE (and/or relay UE) to the target gNB. For example, the serving gNB may transmit the C-RNTI of the current relay UE, SRC/DST L2 ID of the remote UE/relay UE, XNAP ID, the Uu measurement result of the relay UE (and/or Uu measurement result of the remote UE, SL measurement results of the remote UE/relay UE), bearer and bearer mapping information configured for the remote UE and relay UE for the multi-path relaying operation, and the local ID of the remote UE when delivering the information related to the remote UE (and/or relay UE).

Similarly, when the measurement and reporting of the remote UE are triggered, and the serving gNB determines the target gNB for the relay UE, determining that an HO of the relay UE is necessary, the serving gNB for the remote UE may transmit information about the relay UE connected to the remote UE to the target gNB (even though the HO for the relay UE has not been determined), along with the necessary information for the HO of the remote UE. In delivering information related to the the remote UE (and/or the relay UE), the serving gNB may transmit the C-RNTI of the current relay UE, SRC/DST L2 ID of the remote UE/relay UE, XNAP ID, the Uu measurement result of the relay UE (and/or Uu measurement result of the remote UE, SL measurement results of the remote UE/relay UE), bearer and bearer mapping information configured for the remote UE and relay UE for the multi-path relaying operation, and the local ID of the remote UE. In the handover of the relay UE is triggered a certain time after (or before) the HO of the remote UE, the target gNB may use this information received during the HO of the remote UE to configured an indirect path at the target gNB (and/or cell). For example, when the relay UE is subjected to HO (within a certain time) after the HO of the remote UE, the target gNB may quickly configure the indirect path as long as the relay UE maintains the SL connection with the remote UE.

The relay UE may be one of multiple relay UEs connected to the remote UE. Based on the measurement results of the multiple relay UEs, the serving gNB may determine the relay UE that may perform HO to the same target gNB along with the remote UE. In the case where one remote UE is connected to multiple relay UEs, the serving gNB may transmit information only about the relay UE that may perform HO to the same target gNB along with the remote UE during the HO request of the remote UE.

The above description may also be applied to the single path relay operation different from the multi-path relay operation.

In the multi-path relay operation, when the direct link is the primary path, the remote UE receiving the HO command may deactivate the indirect path. If the remote UE and the relay UE perform HO to the same gNB (and/or cell) as described above, the target gNB and/or serving gNB may configure the remote UE to be inactive (and/or active) the indirect link. For example, the (source/target) gNB may include a signal that deactivates the indirect link during the HO configuration for the remote UE and may transmit RRCconfiguration that activates the indirect link as the direct link for the remote UE once the relay UE completes the HO to the same gNB (and/or cell) as the remote UE.

Alternatively, when the direct link is the primary path, the remote UE receiving the HO command may release the indirect link if the HO command does not include any indication to maintain the SL connection with the current relay UE (i.e., if the current connected remote UE is not performing HO to the same gNB). The remote UE that has completed the HO to the new target gNB (and/or cell) may report the RLF of the indirect link and establish a new indirect link.

When the remote UE and the relay UE are subjected to HO to the same gNB (and/or cell), the target gNB may configure, in the HO command for the relay UE and the remote UE, the indirect-related configuration (SL/Uu bearer, bearer mapping) to be used at the target gNB (and/or cell).

In the case where the remote UE and the relay UE are connected by an ideal link, the target gNB may need to be informed that the remote UE and the relay UE are connected by the ideal link when they perform the HO together. In this case, the target gNB may exclude unnecessary SL connection-related configuration between the remote UE and the relay UE from the HO command.

In the description above, the remote UE may be interpreted as a relay UE and the relay UE as a remote UE.

As described above, when the remote UE performs an HO along with the relay UE currently having a U2N connection with the remote UE, the current SL connection may be maintained while satisfying service continuity. If the remote UE performs HO (to inter-gNB/cell) in the multi-path relaying operation rather than operating as described in the present disclosure, the remote UE that intends to perform the multi-path relaying operation in the new target gNB (and/or cell) may need to search for a new relay UE and spend time on the search.

In relation to the description above, a serving gNB may include at least one processor, and at least one computer memory operatively connected to the at least one processor and storing instructions that, when executed, cause the at least one processor to perform operations. The operations may include receiving a measurement result from the remote UE, selecting a target gNB for the HO of the remote UE, transmitting an HO request message to the target gNB, and transmitting an RRC reconfiguration with sync message received from the target gNB to the remote UE. Based on that the serving gNB determines to perform HO of the remote UE and a relay UE for the remote UE to the target gNB, the RRC reconfiguration with sync message may contain information indicating that the remote UE should maintain a connection with the relay UE.

Additionally, provided herein is a non-volatile computer-readable storage medium storing at least one computer program including instructions that, when executed by at least one processor, cause the at least one processor to perform operations for a serving gNB. The operations may include receiving a measurement result from the remote UE, selecting a target gNB for HO of the remote UE, transmitting an HO request message to the target gNB, and transmitting an RRC reconfiguration with sync message received from the target gNB to the remote UE. Based on that the serving gNB determines to perform HO of the remote UE and a relay UE for the remote UE to the target gNB, the RRC reconfiguration with sync message may contain information indicating that the remote UE should maintain a connection with the relay UE.

Further, provide herein is an operation method of a remote UE related to HO of the remote UE in a wireless communication system. The method may include transmitting, by the remote UE, a measurement result to a serving gNB, receiving, by the remote UE, an RRC reconfiguration with sync message transmitted by a target gNB from the serving gNB, transmitting, by the remote UE, an RRC reconfiguration complete message to the target gNB, and transmitting, by the remote UE, data to the target gNB via the relay UE. Based on the remote UE and the relay UE being subjected to HO to the target gNB, the RRC reconfiguration with sync message may contain information indicating that the remote UE should maintain a connection with the relay UE.

Next, the case where a relay UE performing a multi-path relay operation performs HO is discussed.

When the measurement and reporting of the relay UE are triggered and the serving gNB (and/or target gNB) determines the HO based thereon, the information related to (multiple) remote UEs connected to the relay UE may be delivered to the target gNB. The delivered information may include the C-RNTI of the remote UE, SRC/DST L2 ID of the remote UE/relay UE, XNAP ID, the Uu measurement result of the remote UE (and/or relay UE), the SL measurement result measured by the remote UE/relay UE, bearer and bearer mapping information configured for the remote UE and relay UE for the multi-path relaying operation, and the local ID of the remote UE.

In determining the HO of the relay UE, the target (source) gNB may also determine the HO of the connected remote UEs. In this case, the information configured by the target gNB for the relay UE/remote UE may include an indication to maintain the SL connection between the remote UE and the relay UE.

When the primary path is the indirect path and the remote UE undergoing HO along with the relay UE should release the direct link (which may include a case where the direct link for the remote UE cannot undergo HO to the gNB for the relay UE). In this case, the remote UE may report the RLF of the direct link via the indirect link and receive a configuration for a new direct link.

Alternatively, when the relay UE notifies the HO even though the primary path is the indirect path for the remote UE, the remote UE may switch the primary path to the direct path and release the indirect link. When the relay UE notifies the HO, it may need to inform the remote UE about the gNB ID (and/or NCGI (NR Cell Global Identifier), whether the gNB has changed, etc.). If the relay UE remains connected to the same gNB as the remote UE after the HO of the relay UE, the remote UE may not need to release the SL connection with the relay UE. However, if the relay UE undergoes HO to another gNB, the remote UE may need to release the indirect link and report the release to the gNB.

If only one of the remote UE or relay UE connected in a multi-path manner receives an HO command from the target gNB (and/or serving gNB) (i.e., it receives an ACK for the HO), the serving gNB may perform a new configuration for the other one of the remote UE/relay UE that did not receive the HO.

For example, in the case where only the remote UE receives an HO command, the serving gNB for the remote UE may establish a new configuration for the relay UE without any report (e.g., a report on the SL release from the remote UE) from the relay UE. That is, when the higher layer of the remote (and/or relay UE) performs the release and informs that the release is due to HO, the higher layer of the relay UE (and/or remote UE) receiving the same may notify the AS layer of the release. The AS layer receiving the notification may not need to report the release of the SL connection with the remote UE to its BS.

Alternatively, if only the relay UE receives an HO command, the serving gNB of the relay UE may establish a new configuration for the remote UE without any report (e.g., a report on the SL release from the relay UE) from the remote UE. Thus, when the relay UE receiving the HO command recognizes that the remote UE performs the multi-path operation, it does not need to notify the relay UE of the HO command it has received. Similarly, even when the SL connection with the relay UE is released due to the HO of the relay UE, the remote UE may not need to notify the BS of the release.

In other words, when the higher layer of the relay UE/remote UE releases the SL due to the HO, it may indicate to the AS layer that there is no need to notify the gNB of the release. This is intended to prevent unnecessary reporting to the gNB.

In the SL operation, SL measurements may be performed for each SRC/DST pair. Accordingly, in the case where the serving gNB/target gNB determines the HO based on only one SRC/DST pair, an issue may be raised. This is because a single remote UE/relay UE may be connected to multiple relay UEs/remote UEs and UEs performing a pure site link operation. Therefore, to determine HO, the serving/target gNB may need to consider all other SRC/DST pairs connected to the relay UE/remote UE. To this end, if the measurement and reporting of one SRC/DST pair are triggered, measurement and reporting of the other SRC/DST pairs may also configured to be triggered.

In the present disclosure, the primary link described above refers to the link determined by the gNB between the direct/indirect links, a path for communicating control signal, a link for performing connection establishment, a path for transmitting a large volume of data, a path where security-related configuration are established, etc.

Hereinafter, an embodiment related to a scenario where the gNB provides several possibilities for HO to a direct path and to an indirect path, and the remote UE performs HO when certain conditions are satisfied is disclosed.

In the multi-path operation, the radio resource control (RRC) state of the relay UE selected by the remote UE may be RRC IDLE/INACTIVE/CONNECTED. When the remote UE (and/or the serving gNB for the remote UE) that has a direct (and/or indirect) link determines a relay UE to establish an SL connection, the selected relay UE may be in the RRC_IDLE or RRC _INACTIVE state. In this case, before establishing the SL connection with the remote UE, the relay UE may enter the CONNECTED state (and/or perform RACH) with a cell (and/or gNB) different from the cell (and/or gNB) it had previously indicated it was camped on through a discovery message or the like. Alternatively, a relay UE in the RRC _IDLE/INACTIVE state may establish an SL connection with the remote UE, and this may serve as the triggering condition for the relay UE to transition to the RRC_CONNECTED state. In this case, if the relay UE for which the RRC_CONNECTED state has been triggered becomes connected to a cell (and/or gNB) different from the cell (and/or gNB) it had previously broadcasted through a discovery message or the like, the question arises as to how the remote UE should operate. Therefore, the following describes a method to address the aforementioned issue that may occur when a remote UE with a direct/indirect link establishes a connection for multi-path relaying with a relay UE in the RRC _IDLE/INACTIVE state.

First, an embodiment related to the operation where the remote UE has a direct (and/or indirect) link with the gNB and receives a command for multi-path operation (and/or HO) from the gNB will be discussed.

The serving gNB or target gNB may provide information related to the relay UE with which the remote UE will establish an SL connection (via reconfiguration with sync). However, since the remote UE may fail to establish an SL connection with the designated relay UE, the serving gNB or target gNB may provide auxiliary information along with the multi-path (and/or HO) command to prepare for the possibility that the remote UE fails to perform the multi-path operation (and/or HO). The auxiliary information provided by the target gNB may include IDs of other candidate relay UEs and/or information that may help in establishing a connection via the direct link.

For example, the serving gNB or target gNB may inform the remote UE of multiple candidate relay UEs with which it may establish an SL connection in the form of a list within the multi-path (and/or HO) command for the remote UE. The remote UE should first attempt to establish an SL connection with the relay UE whose ID is listed first in the list and may proceed to attempt SL connections in the order of the list. Here, the first relay UE in the list is an example. Among the various candidate relay UEs in the list, the remote UE may select an arbitrary relay UE, a pre-configured relay UE, or a randomly selected relay UE.

To this end, the serving gNB (and/or cell) may send a request for multi-path operation (and/or HO) to the serving (and/or camped on) cells (i.e., target gNB and/or cell) of (all/and several) candidate relay UEs in the list. The candidate relay UEs in the list may all belong to the same target gNB (and/or cell). In other words, the serving gNB (and/or cell) may determine one relay UE and provide the target gNB with information related to other candidate relay UEs belonging to the same target gNB (and/or cell).

If it is not defined that (all/several) candidate relay UEs in the list all belong to the same target gNB (and/or cell), the serving gNB may send a request for multi-path operation (and/or HO) to each serving (and/or camped on) cell (i.e., target cell) of (all/several) candidate relay UEs in the list. In this case, each target cell may issue an RRCReconfiguration (reconfiguration with sync) command related to HO to the remote UE. The remote UE may then attempt to access a relay UE by selecting one of the RRCReconfiguration commands (including the multi-path/HO command) from various target cells.

Alternatively, if it is not defined that (all/several) candidate relay UEs in the list all belong to the same target gNB (and/or cell), the serving gNB may combine the reconfiguration (with sync) messages from multiple target gNBs and transmit the same to the remote UE in a single message format. If multiple target gNBs (and/or cells) are configured, the source gNB may determine the order of the listed candidate relay UEs.

The remote UE receiving the message may attempt to establish an SL connection first with the candidate relay UE at the top of the candidate relay UE list in the RRC (e.g., reconfiguration with sync) message. If the remote UE fails to establish an SL connection with the designated relay UE but still has remaining time on the multi-path (and/or HO) related timer (e.g., T304, T304-like, T420, or T420-like), it may attempt SL connections with other candidate relay UEs listed in the RRC (e.g., reconfiguration with sync) message. As long as the multi-path (and/or HO) related timer has remaining time, the remote UE may continue to attempt SL connections with other candidate relay UEs based on the given order in the list.

The source gNB (and/or cell) may determine one proper relay UE for multi-path (and/or HO) and make a request for multi-path (and/or HO) to the target gNB (and/or cell) of the determined relay UE. The source gNB may inform the target gNB of the L2 SRC/DST ID of the determined relay UE, measurement values (SD-RSRP, Uu link signal strength measured by the relay UE/remote UE), local ID, cell ID, PLMN ID, etc. The source gNB may also provide the IDs and measurement results of other candidate relay UEs belonging to the same target cell.

The target gNB receiving the information may transmit an ACK for the multi-path (and/or HO) request for the relay UE received from the source gNB. The target gNB may transmit an RRC (reconfiguration with sync) message to the remote UE. In this case, it may provide both the ID of the relay UE determined by the source gNB and/or the target gNB to establish an indirect link and information for direct access to the target gNB (e.g., a preamble value for contention-free based RACH).

The remote UE receiving the RRC message may determine the indirect path and direct path for the (same) target gNB (and/or cell). For example, when the remote UE determines the indirect path, it may first attempt an SL connection with a relay UE included in the RRC message. When the remote UE fails to complete the SL connection (and/or receives a notification message from the relay UE, (and/or) detects a cell change of the relay UE in the IDLE/INACTIVE state, (and/or) completes the SL connection but fails to transmit the RRCReconfigurationComplete message, etc.), it may attempt a direct link connection with the target gNB if the multi-path (and/or HO) related timer (e.g., T304, T304-like, T420, or T420-like) has not expired (i.e., remaining time is left).

As another example, when the remote UE determines the direct path, it may perform RACH to the target gNB (and/or cell). If it fails to perform RACH, it may attempt an SL connection with the relay UE included in the RRC message to transmit the RRCReconfigurationComplete message if the multi-path (and/or HO) related timer (e.g., T304, T304-like, T420, or T420-like) has not expired (i.e., remaining time is left). If there are multiple relay UEs listed in the RRC message, it may attempt to establish an SL connection with the relay UEs from the first UE in the list.

In this case, the BS may expect that the remote UE is capable of accessing both the direct and indirect links.

If the (source/target) gNB determines a link the remote UE should access first between teh links (e.g., direct link or indirect link) for acces to the target gNB, the RRC message may indicate the type of link the target gNB expects as a priority. For example, the target gNB may expect the remote UE to access directly and may indicate this to the remote UE. The remote UE, upon receiving this indication, may attempt to access through the prioritized access link (the direct link in this example) as indicated by the target gNB. If the attempt fails (e.g., RACH failure), the remote UE may then use the relay UE included in the RRC message to attempt access via the indirect link.

In this case, the gNB should be aware that, although it expects the remote UE to access through the direct link, access via the indirect link is also possible. The reverse scenario may also occur. For example, the target gNB (and/or cell) may expect the remote UE to access via the indirect link and establish a related configuration for the determined relay UE. However, if the remote UE accesses directly contrary to the expectation, the gNB should adjust the prepared configuration (RRC Reconfiguration) of the relay UE.

To this end, the remote UE may include its L2 SRC (and/or DST) ID in the RRCReconfigurationComplete message. This allows the BS to adjust the pre-established configuration for the relay UE (because the configuration for the remote UE provided by the BS for the relay UE is based on the L2 SRC/DST ID).

When the multi-path (and/or HO) related timer expires in this operation, the remote UE receiving the HO-related command may perform RRC reestablishment. The reestablishment may be performed through both the direct link and indirect link.

Once the multi-path-related timer expires, the remote UE may report the expiration to the serving gNB thereof.

A remote UE commanded to perform HO via the indirect link may fail to establish the indirect connection. If the indirect link connection fails and the HO-related timer is still running, the remote UE may attempt to transmit the RRCReconfigurationComplete message via the direct link. Alternatively, it may select another relay UE belonging to the target gNB (as identified by the discovery message) to establish an SL connection and transmit the RRCReconfigurationComplete message via a new indirect link.

The remote UE commanded to perform HO through the direct link may fail to establish the direct link connection. If the direct link connection fails and the HO-related timer is still running, the remote UE may attempt to transmit the RRCReconfigurationComplete message via the indirect link. Here, the indirect link refers to the link established with a relay UE connected to (and/or camped on) the target gNB, as identified by the discovery message or the like.

If the remote UE fails to complete the HO before the HO timer expires, it may perform RRCReestablishment. The RRCReestablishment may be performed primarily for the source gNB and target gNB. It may be performed through both the direct and indirect links.

In the Direct-to-indirect HO operation, if the remote UE receives a HO command and attempts to establish an SL connection with the relay UE but receives an RRCReconfigurationFailureSidelink message from the relay UE, the remote UE may operate as follows:

(Option 1) The remote UE reports to the serving gNB that it has received an RRCReconfigurationFialureSidelink message from the relay UE (including the cause value). The serving gNB may inform the target gNB of the message. Additionally, the serving gNB may either find a new target gNB and send an HO request thereto or find a new target relay UE and send an HO request to the target gNB that the new relay UE belongs to.

(Option 2) The remote UE may transmit the RRCReconfigurationComplete message to the target gNB through the direct link. There may be two ways to reach the target cell tower: direct and indirect. Since transmission through the indirect link has failed, the remote UE may attempt to transmit the HO completion message directly to the target gNB (if the HO-related timer is still running).

(Option 3) The remote UE determines the HO failure and performs RRC Reestablishment. The reestablishment may be performed through either the direct or indirect link. In this case, since the HO failure has been determined, the HO-related timer (T304-like) may be stopped.

In the multi-path operation, if a remote UE having a direct link receives an RRCReconfigurationFailureSidelink message while establishing an SL connection with a relay UE for indirect link setup, the remote UE informs the serving gNB of the message. Alternatively, the remote UE may notify the serving gNB of the failure to set up the indirect link, including the cause value.

In the above context, the term HO may be replaced with path switching.

According to the embodiments described above, by providing auxiliary information in the RRC message through which the remote UE commands the multi-path (and/or HO) in case of failure to access the direct link or the indirect link, the possibility of the remote UE failing to perform the multi-path (and/or HO) operation may be reduced. This may ensure stability of the connection and service continuity.

As described in the embodiments above, the BS may provide several possibilities of HO through the direct path and HO through the indirect path, and the remote UE may perform HO when certain conditions are satisfied. In such cases, the remote UE may start both T304 and T420 or rely on the longer timer between T304 and T420. Alternatively, if one of the two timers has not expired, the remote UE may perform the operation corresponding to the unexpired timer. Various related examples will be described below.

In the multi-path operation, if the remote UE has a direct link, it may establish a new connection via the indirect link. In this case, the remote UE reports information about candidate relay UEs (e.g., the IDs of the candidate relay UEs and measurement values (SD-RSRP, Uu RSRP of the remote/relay UEs, etc.), the serving cell/camp on cell ID of the relay UE, PLMN ID, etc.) to the serving gNB through the direct link. The serving gNB may provide the remote UE with a list of one or more candidate relay UEs through the direct link. This information may be delivered in an RRCReconfiguration message. The remote UE receiving this message may establish an SL connection with the relay UE included in the RRCReconfiguration and transmit an RRCReconfigurationComplete message to the serving gNB through the indirect link via the relay UE.

In the HO operation of the remote UE, the remote UE may have both direct and indirect links. When the remote UE having the direct/indirect link accesses the target gNB through the direct/indirect link, the operation may be similar to the multi-path operation described above. The remote UE may report information related to the candidate relay UEs to its serving gNB, and receive an HO-related RRCReconfiguration from the serving gNB. The remote UE may then establish an SL connection with the relay UE included in the RRCReconfiguration and transmit the RRCReconfigurationComplete message to the target gNB through the indirect link via the relay UE.

In the multi-path relay or HO operation, the target gNB and/or serving gNB may provide (a list of) multiple candidate relay UEs. The remote UE may first attempt to access the target gNB through the direct link. If the attempt fails, related information may be provided to allow the remote UE may access through the indirect link. Alternatively, if the remote UE first attempts to access through the indirect link and the attempt fails, related information may be provided to allow for access through the direct link.

The remote UE may be set to establish an SL connection with the relay UE for the multi-path relaying (and/or HO) operation (for indirect link setup of the remote UE). In this case, a list of multiple candidate relay UEs may be provided for the remote UE. If the remote UE fails to establish an SL connection with a relay UE from the provided list (and/or fails to transmit the RRCReconfigurationComplete message, receives a notification message from the relay UE, etc.), it may attempt to establish an SL connection with another relay UE from the list. These operations are possible for the remote UE only before the multi-path relaying (and/or HO) related timer (e.g., T304, T304-like, T420, or T420-like) expires.

Generally, the timer required to establish an SL connection (e.g., T400) is expected to be set to a smaller value than the timer for multi-path relaying (and/or HO). This is because, when the remote UE establishes an indirect link during multi-path (and/or HO), the time required to establish the SL connection and the Uu link must be considered.

During the process in which the remote UE establishes an SL connection with a candidate relay UE due to multi-path (and/or HO), the multi-path (and/or HO) related timer (e.g., T304, T304-like, T420, or T420-like) may expire while the SL connection related timer (e.g., T400 timer) may continue running. This may happen, especially in cases where the gNB informs the remote UE of several candidate relay UEs through an RRC message, and the remote UE fails to establish an SL connection with one of the relay UEs and subsequently establishes an SL connection with another relay UE.

When the multi-path (and/or HO) related timer expires, the remote UE no longer needs to establish an SL connection with the relay UE for multi-path (and/or HO). Therefore, once the multi-path (and/or HO) related timer expires, the SL connection-related timer should also stop.

Alternatively, if the SL connection related timer is not stopped, and the remote UE and the relay UE establish an SL connection within the timer, the upper layer of the remote UE must be informed that the SL has been completed (in a situation in which the multi-path (and/or HO) related timer has expired). The upper layer of the remote UE may then release the established SL connection.

The target gNB and/or source gNB may establish a configuration enabling access to both the direct and indirect links while transmitting an RRC message related to multi-path (and/or HO) to the remote UE. In this case, the remote UE may make access through one of the links (wherein the priority may be assigned to the link determined by the target gNB and/or source gNB). In the case where the remote UE fails to access the target gNB through the selected link, it may attempt access through the other link.

For example, if the remote UE prioritizes accessing the target gNB through the direct link, it may start both the T304 timer and T420 timer. If the remote UE fails to access the target gNB through the direct link and there is still remaining time on the T420 timer (and/or the T420 timer has not expired), it may attempt to access the target gNB through the indirect link.

Alternatively, if the remote UE prioritizes accessing the target gNB through the indirect link, it may still start both the T304 timer and T420 timer. If the remote UE fails to access the target gNB through the indirect link and there is still remaining time on the T304 timer (and/or the T304 timer has not expired), it may attempt to access the target gNB through the direct link. In such cases, the target gNB (and/or source gNB) allows the possibility of the remote UE accessing through the direct or indirect link, and thus the T420 timer may be exceptionally applied even when accessing through the direct link. In other words, when the remote UE receives RRCReconfiguration related to multi-path (and/or HO) and the corresponding is set to allow for access through both the direct and indirect links, only the T420 timer may be started. The target gNB may expect the remote UE to access through the direct link primarily. However, if the direct access fails, only the T420 timer may be applied to the remote UE because access through the indirect link is also allowed.

In the description above, for the remote UE performing the multi-path (and/or HO) related operation, conditions for stopping the multi-path (and/or HO) timer and the timer to be applied when configurations through both direct and indirect links are allowed have been proposed. Thus, the timer operation and multi-path (and/or HO) operation for the remote UE may be efficiently performed.

Examples of communication systems applicable to the present disclosure

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/-description, the same reference symbols may denote the same or corresponding hardware blocks, software blocks, or functional blocks unless described otherwise.

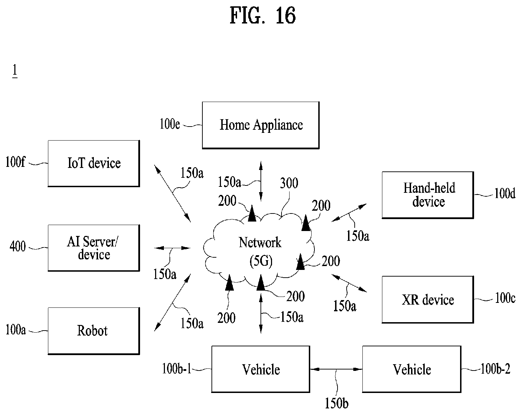

FIG. 16 illustrates a communication system 1 applied to the present disclosure.

Referring to FIG. 16, a communication system 1 applied to the present disclosure includes wireless devices, BSs, and a network. Herein, the wireless devices represent devices performing communication using RAT (e.g., 5G NR or LTE) and may be referred to as communication/radio/5G devices. The wireless devices may include, without being limited to, a robot 100a, vehicles 100b-1 and 100b-2, an extended reality (XR) device 100c, a hand-held device 100d, a home appliance 100e, an Internet of things (IoT) device 100f, and an artificial intelligence (AI) device/server 400. For example, the vehicles may include a vehicle having a wireless communication function, an autonomous driving vehicle, and a vehicle capable of performing communication between vehicles. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. V2V/V2X communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as UL/DL communication 150a, sidelink communication 150b (or, D2D communication), or inter BS communication (e.g. relay, integrated access backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

Examples of wireless devices applicable to the present disclosure

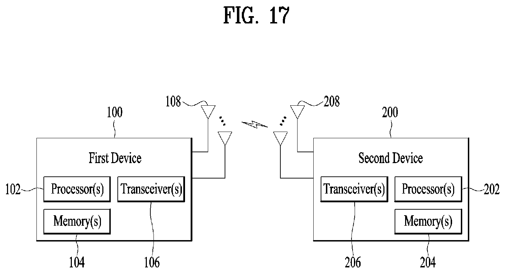

FIG. 17 illustrates wireless devices applicable to the present disclosure.

Referring to FIG. 17, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 16.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more service data unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

Examples of a vehicle or an autonomous driving vehicle applicable to the present disclosure

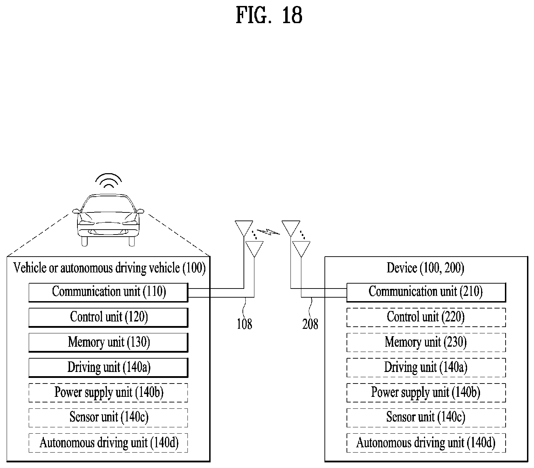

FIG. 18 illustrates a vehicle or an autonomous driving vehicle applied to the present disclosure. The vehicle or autonomous driving vehicle may be implemented by a mobile robot, a car, a train, a manned/unmanned aerial vehicle (AV), a ship, etc.

Referring to FIG. 18, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Examples of a vehicle and AR/VR applicable to the present disclosure

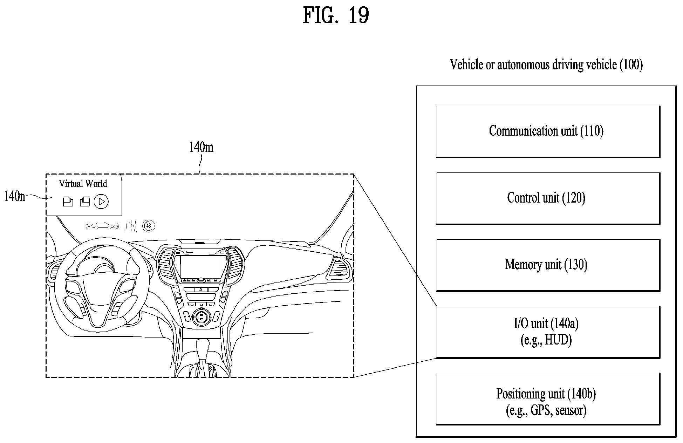

FIG. 19 illustrates a vehicle applied to the present disclosure. The vehicle may be implemented as a transport means, an aerial vehicle, a ship, etc.
Referring to FIG. 19, a vehicle 100 may include a communication unit 110, a control unit 120, a memory unit 130, an I/O unit 140a, and a positioning unit 140b.
The communication unit 110 may transmit and receive signals (e.g., data and control signals) to and from external devices such as other vehicles or BSs. The control unit 120 may perform various operations by controlling constituent elements of the vehicle 100. The memory unit 130 may store data/parameters/programs/code/commands for supporting various functions of the vehicle 100. The I/O unit 140a may output an AR/VR object based on information within the memory unit 130. The I/O unit 140a may include an HUD. The positioning unit 140b may acquire information about the position of the vehicle 100. The position information may include information about an absolute position of the vehicle 100, information about the position of the vehicle 100 within a traveling lane, acceleration information, and information about the position of the vehicle 100 from a neighboring vehicle. The positioning unit 140b may include a GPS and various sensors.
As an example, the communication unit 110 of the vehicle 100 may receive map information and traffic information from an external server and store the received information in the memory unit 130. The positioning unit 140b may obtain the vehicle position information through the GPS and various sensors and store the obtained information in the memory unit 130. The control unit 120 may generate a virtual object based on the map information, traffic information, and vehicle position information and the I/O unit 140a may display the generated virtual object in a window in the vehicle (1410 and 1420). The control unit 120 may determine whether the vehicle 100 normally drives within a traveling lane, based on the vehicle position information. If the vehicle 100 abnormally exits from the traveling lane, the control unit 120 may display a warning on the window in the vehicle through the I/O unit 140a. In addition, the control unit 120 may broadcast a warning message regarding driving abnormity to neighboring vehicles through the communication unit 110. According to situation, the control unit 120 may transmit the vehicle position information and the information about driving/vehicle abnormality to related organizations.

Examples of an XR device applicable to the present disclosure

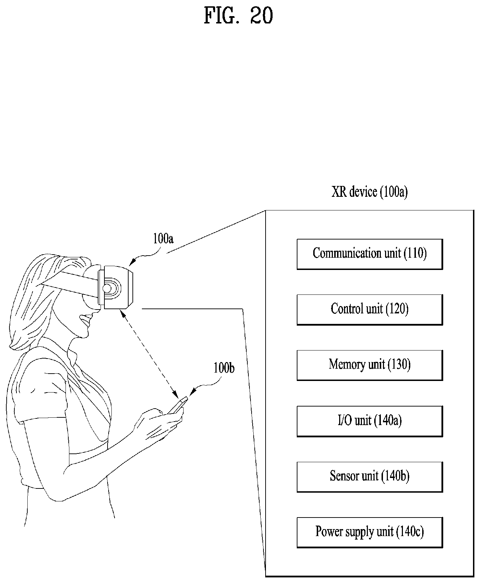

FIG. 20 illustrates an XR device applied to the present disclosure. The XR device may be implemented by an HMD, an HUD mounted in a vehicle, a television, a smartphone, a computer, a wearable device, a home appliance, a digital signage, a vehicle, a robot, etc.
Referring to FIG. 20, an XR device 100a may include a communication unit 110, a control unit 120, a memory unit 130, an I/O unit 140a, a sensor unit 140b, and a power supply unit 140c.
The communication unit 110 may transmit and receive signals (e.g., media data and control signals) to and from external devices such as other wireless devices, hand-held devices, or media servers. The media data may include video, images, and sound. The control unit 120 may perform various operations by controlling constituent elements of the XR device 100a. For example, the control unit 120 may be configured to control and/or perform procedures such as video/image acquisition, (video/image) encoding, and metadata generation and processing. The memory unit 130 may store data/parameters/programs/code/commands needed to drive the XR device 100a/generate XR object. The I/O unit 140a may obtain control information and data from the exterior and output the generated XR object. The I/O unit 140a may include a camera, a microphone, a user input unit, a display unit, a speaker, and/or a haptic module. The sensor unit 140b may obtain an XR device state, surrounding environment information, user information, etc. The sensor unit 140b may include a proximity sensor, an illumination sensor, an acceleration sensor, a magnetic sensor, a gyro sensor, an inertial sensor, an RGB sensor, an IR sensor, a fingerprint recognition sensor, an ultrasonic sensor, a light sensor, a microphone and/or a radar. The power supply unit 140c may supply power to the XR device 100a and include a wired/wireless charging circuit, a battery, etc.

For example, the memory unit 130 of the XR device 100a may include information (e.g., data) needed to generate the XR object (e.g., an AR/VR/MR object). The I/O unit 140a may receive a command for manipulating the XR device 100a from a user and the control unit 120 may drive the XR device 100a according to a driving command of a user. For example, when a user desires to watch a film or news through the XR device 100a, the control unit 120 transmits content request information to another device (e.g., a hand-held device 100b) or a media server through the communication unit 130. The communication unit 130 may download/stream content such as films or news from another device (e.g., the hand-held device 100b) or the media server to the memory unit 130. The control unit 120 may control and/or perform procedures such as video/image acquisition, (video/image) encoding, and metadata generation/processing with respect to the content and generate/output the XR object based on information about a surrounding space or a real object obtained through the I/O unit 140a/sensor unit 140b.

The XR device 100a may be wirelessly connected to the hand-held device 100b through the communication unit 110 and the operation of the XR device 100a may be controlled by the hand-held device 100b. For example, the hand-held device 100b may operate as a controller of the XR device 100a. To this end, the XR device 100a may obtain information about a 3D position of the hand-held device 100b and generate and output an XR object corresponding to the hand-held device 100b.

Examples of a robot applicable to the present disclosure

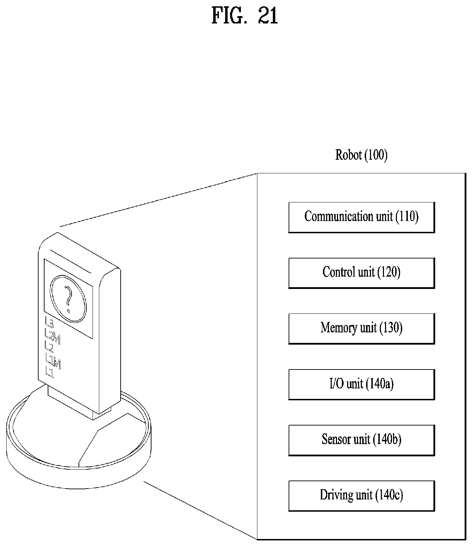

FIG. 21 illustrates a robot applied to the present disclosure. The robot may be categorized into an industrial robot, a medical robot, a household robot, a military robot, etc., according to a used purpose or field.

Referring to FIG. 21, a robot 100 may include a communication unit 110, a control unit 120, a memory unit 130, an I/O unit 140a, a sensor unit 140b, and a driving unit 140c.

The communication unit 110 may transmit and receive signals (e.g., driving information and control signals) to and from external devices such as other wireless devices, other robots, or control servers. The control unit 120 may perform various operations by controlling constituent elements of the robot 100. The memory unit 130 may store data/parameters/programs/code/commands for supporting various functions of the robot 100. The I/O unit 140a may obtain information from the exterior of the robot 100 and output information to the exterior of the robot 100. The I/O unit 140a may include a camera, a microphone, a user input unit, a display unit, a speaker, and/or a haptic module. The sensor unit 140b may obtain internal information of the robot 100, surrounding environment information, user information, etc. The sensor unit 140b may include a proximity sensor, an illumination sensor, an acceleration sensor, a magnetic sensor, a gyro sensor, an inertial sensor, an IR sensor, a fingerprint recognition sensor, an ultrasonic sensor, a light sensor, a microphone, a radar, etc. The driving unit 140c may perform various physical operations such as movement of robot joints. In addition, the driving unit 140c may cause the robot 100 to travel on the road or to fly. The driving unit 140c may include an actuator, a motor, a wheel, a brake, a propeller, etc.

Example of AI device to which the present disclosure is applied.

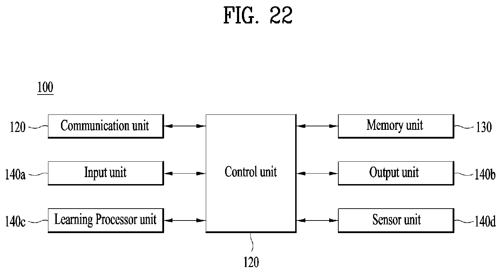

FIG. 22 illustrates an AI device applied to the present disclosure. The AI device may be implemented by a fixed device or a mobile device, such as a TV, a projector, a smartphone, a PC, a notebook, a digital broadcast terminal, a tablet PC, a wearable device, a Set Top Box (STB), a radio, a washing machine, a refrigerator, a digital signage, a robot, a vehicle, etc.

Referring to FIG. 22, an AI device 100 may include a communication unit 110, a control unit 120, a memory unit 130, an I/O unit 140a/140b, a learning processor unit 140c, and a sensor unit 140d.

The communication unit 110 may transmit and receive wired/radio signals (e.g., sensor information, user input, learning models, or control signals) to and from external devices such as other AI devices (e.g., 100x, 200, or 400 of FIG. 16) or an AI server (e.g., 400 of FIG. 16) using wired/wireless communication technology. To this end, the communication unit 110 may transmit information within the memory unit 130 to an external device and transmit a signal received from the external device to the memory unit 130.

The control unit 120 may determine at least one feasible operation of the AI device 100, based on information which is determined or generated using a data analysis algorithm or a machine learning algorithm. The control unit 120

**EP 4 590 026 A1**

may perform an operation determined by controlling constituent elements of the AI device 100. For example, the control unit 120 may request, search, receive, or use data of the learning processor unit 140c or the memory unit 130 and control the constituent elements of the AI device 100 to perform a predicted operation or an operation determined to be preferred among at least one feasible operation. The control unit 120 may collect history information including the operation contents of the AI device 100 and operation feedback by a user and store the collected information in the memory unit 130 or the learning processor unit 140c or transmit the collected information to an external device such as an AI server (400 of FIG. 16). The collected history information may be used to update a learning model.

The memory unit 130 may store data for supporting various functions of the AI device 100. For example, the memory unit 130 may store data obtained from the input unit 140a, data obtained from the communication unit 110, output data of the learning processor unit 140c, and data obtained from the sensor unit 140. The memory unit 130 may store control information and/or software code needed to operate/drive the control unit 120.

The input unit 140a may acquire various types of data from the exterior of the AI device 100. For example, the input unit 140a may acquire learning data for model learning, and input data to which the learning model is to be applied. The input unit 140a may include a camera, a microphone, and/or a user input unit. The output unit 140b may generate output related to a visual, auditory, or tactile sense. The output unit 140b may include a display unit, a speaker, and/or a haptic module. The sensing unit 140 may obtain at least one of internal information of the AI device 100, surrounding environment information of the AI device 100, and user information, using various sensors. The sensor unit 140 may include a proximity sensor, an illumination sensor, an acceleration sensor, a magnetic sensor, a gyro sensor, an inertial sensor, an RGB sensor, an IR sensor, a fingerprint recognition sensor, an ultrasonic sensor, a light sensor, a microphone, and/or a radar.

The learning processor unit 140c may learn a model consisting of artificial neural networks, using learning data. The learning processor unit 140c may perform AI processing together with the learning processor unit of the AI server (400 of FIG. 16). The learning processor unit 140c may process information received from an external device through the communication unit 110 and/or information stored in the memory unit 130. In addition, an output value of the learning processor unit 140c may be transmitted to the external device through the communication unit 110 and may be stored in the memory unit 130.

[Industrial Applicability]

The above-described embodiments of the present disclosure are applicable to various mobile communication systems.

**Claims**

1. An operation method of a serving base station related to handover (HO) of a remote user equipment (UE) in a wireless communication system, the method comprising:

   receiving, by the serving base station, a measurement result from the remote UE;
   selecting, by the serving base station, a target base station for the HO of the remote UE;
   transmitting, by the serving base station, an HO request message to the target base station; and
   transmitting, by the serving base station, an RRC reconfiguration with sync message received from the target base station to the remote UE,
   wherein, based on that the serving base station determines to perform HO of the remote UE and a relay UE for the remote UE to the target base station, the RRC reconfiguration with sync message contains information indicating that the remote UE should maintain a connection with the relay UE.

2. The method of claim 1, wherein, based on that the serving base station determines to perform HO of the remote UE and a relay UE for the remote UE to the target base station, the RRC reconfiguration with sync message transmitted to the relay UE by the serving base station contains information indicating that the relay UE should maintain a connection with the remote UE.

3. The method of claim 1, wherein the HO request message contains information indicating that the remote UE and the relay UE are in a multi-path relay relationship.

4. The method of claim 1, wherein the serving base station transmits information related to the relay UE to the target base station.

**5.** The method of claim 1, wherein the information related to the relay UE comprises a C-RNTI of the relay UE, SRC L2 ID, DST L2 ID, XNAP ID, an L2 ID Uu measurement result, a bearer, and bearer mapping information, the bearer and bearer mapping information being configured by the serving base station for a multi-path relay operation.

**6.** The method of claim 1, wherein the relay UE is one of a plurality of relay UEs connected to the remote UE.

**7.** The method of claim 6, wherein the relay UE is a UE determined by the serving base station to be subjected to the HO to the target base station along with the remote UE based on measurement results for the plurality of relay UEs.

**8.** A serving base station operating a wireless communication system, comprising:

at least one processor; and
at least one computer memory operatively connected to the at least one processor and storing instructions that, when executed, cause the at least one processor to perform operations,
wherein the operations comprise:

receiving a measurement result from a remote user equipment (UE);
selecting a target base station for handover (HO) of the remote UE;
transmitting an HO request message to the target base station; and
transmitting an RRC reconfiguration with sync message received from the target base station to the remote UE,
wherein, based on that the serving base station determines to perform HO of the remote UE and a relay UE for the remote UE to the target base station, the RRC reconfiguration with sync message contains information indicating that the remote UE should maintain a connection with the relay UE.

**9.** A non-volatile computer-readable storage medium storing at least one computer program including instructions that, when executed by at least one processor, cause the at least one processor to perform operations for a serving base station,
wherein the operations comprise:

receiving a measurement result from the remote UE;
selecting a target base station for handover (HO) of the remote UE;
transmitting an HO request message to the target base station; and
transmitting an RRC reconfiguration with sync message received from the target base station to the remote UE,
wherein, based on that the serving base station determines to perform HO of the remote UE and a relay UE for the remote UE to the target base station, the RRC reconfiguration with sync message contains information indicating that the remote UE should maintain a connection with the relay UE.

**10.** An operation method of a remote user equipment (UE) related to handover (HO) of the remote UE in a wireless communication system, the method comprising:

transmitting, by the remote UE, a measurement result to a serving base station;
receiving, by the remote UE, an RRC reconfiguration with sync message transmitted by a target base station from the serving base station;
transmitting, by the remote UE, an RRC reconfiguration complete message to the target base station; and
transmitting, by the remote UE, data to the target base station via the relay UE,
wherein, based on the remote UE and the relay UE being subjected to HO to the target base station, the RRC reconfiguration with sync message contains information indicating that the remote UE should maintain a connection with the relay UE.

**11.** The method of claim 10, wherein the remote UE communicates with at least one of another UE, a UE or base station related to a self-driving vehicle, or a network.

# FIG. 1

Evolution to 5G,
while maintaining backward compatibility

Advanced use cases
5G V2X R16

Enhanced safety
C-V2X R14/15

Higher throughput    Wideband raging
Higher reliability    and positioning
Lower latency

Basic safety
802.11p or C-V2X R14

Enhanced range and reliability

Vehicle
Platooning

Extended
Sensors

Remote
Driving

Advanced
Driving

# FIG. 2

# FIG. 3

(a)

(b)

# FIG. 4

# FIG. 5

| gNB |
| --- |
| Inter-Cell RRM |
| RB Control |
| Connection Mobility Control |
| Radio Access Control |
| Measurement Configuration and Provisioning |
| Dynamic Resource Allocation (Scheduler) |

NG-RAN

| AMF |
| --- |
| NAS Security |
| Idle-State Mobility Processing |

| SMF |
| --- |
| UE IP Address Allocation |
| PDU Session Control |

| UPF |
| --- |
| Mobility Anchoring |
| PDU Processing |

5GC

Internet

# FIG. 6

| ··· | One Frame (10ms) | ··· |

| ··· | Half-Frame (5ms) | Half-Frame (5ms) | ··· |

| ··· | Subframe 0 (1ms) | ··· | Subframe 4 (1ms) | Subframe 5 (1ms) | ··· | Subframe 9 (1ms) | ··· |

Subframe (1ms)

**15KHz**

| Slot 0 (14symbols) |

1ms

**30KHz**

| Slot 0 (14symbols) | Slot 1 |

500us

**60KHz**

| Slot 0 (14symbols) | Slot 1 | Slot 2 | Slot 3 |

250us

**120KHz**

| Slot 0 (14symbols) | Slot 1 | Slot 2 | Slot 3 | Slot 4 | Slot 5 | Slot 6 | Slot 7 |

125us

# FIG. 7

Resource Grid

Carrier
( up to 3300 subcarriers,
i.e., 275 RBs )

A BWP

1 RB
= 12 subcarriers

1 RE

1 subcarrier

1 symbol

l = 0 · · ·

k = 0

# FIG. 8

PU5-U

(a)

PU5-C

(b)

# FIG. 9

UE A | UE B

SDAP ←→ SDAP

PDCP ←→ PDCP

RLC ←→ RLC

MAC ←→ MAC

PHY ←→ PHY

PU5-U

(a)

UE A | UE B

RRc ←→ RRC

PDCP ←→ PDCP

RLC ←→ RLC

MAC ←→ MAC

PHY ←→ PHY

PU5-U

(b)

# FIG. 10

# FIG. 11

(a)                                        (b)

# FIG. 12

| Remote UE | | Relay UE | | gNB |

S1200 — Discovery

S1201 — PC5 Connection Establishment

S1202 — RRC Setup Request

S1203 — RRC Setup

S1204 — Prepare PC5 and Uu RLC channel for SRB1

S1205 — RRC Setup Complete

S1206 — Security Mode Command

S1207 — Security Mode Complete

S1208 — RRC Reconfiguration

S1209 — RR Reconfiguration Complete

S1210 — Prepare PC5 and Uu RLC channel for SRB2/DRB

FIG. 13

Remote UE          Relay UE          gNB

S1300
UL/DL data

S1301
Measurement configuration and reporting

S1302⟋ | Decision of switching to a
        | target relay UE

S1203
RRC Reconfiguration and RRC
Reconfiguration Complete Message

S1304
RRC Reconfiguration message

S1305
PC5 connection establishment, if not exist

S1306
RRC Reconfiguration Complete Message

S1307
UL/DL data

FIG. 14

| source NG-RAN node | | target NG-RAN node |

HANDOVER REQUEST →

← HANDOVER REQUEST ACKNOWLEDGE

# FIG. 15

| Remote UE | Remote UE | Serving gNB | Target gNB |
|-----------|-----------|-------------|------------|

UL/DL data (S1500)

UL/DL data (S1500`)

Measurement and reporting (S1501)

Measurement and reporting (S1501`)

Determining that remote UE and relay UE are
allowed to be subjected to HO to same target gNB

XnAP HO req/NGAP HO required (S1502a)

(Indicating that remote UE and relay UE are in multi-
path relaying relationship)

HO req ACK(/HO preparation failure) (S1502b)

RRC reconfiguration for relay UE (HO 지시) (S1502)

RRC reconfiguration for remote UE (HO 지시) (S1502`)

RRC reconfigurationComplete from relay UE (S1503)

RRC reconfigurationComplete from remote UE (S1503`)

UL/DL data (S1504)

UL/DL data (S1504`)

FIG. 16

<u>1</u>

100e — Home Appliance

100f — IoT device

150a

150a — 300

200 —

200

Hand-held device — 100d

150a

400 — AI Server/ device

Network (5G)

200

150a

150a

XR device — 100c

100a — Robot

150a

200

200

150a

100b-1 — Vehicle

Vehicle — 100b-2

150b

FIG. 17

FIG. 18

| Vehicle or autonomous driving vehicle (100) |
| --- |
| Communication unit (110) |
| Control unit (120) |
| Memory unit (130) |
| Driving unit (140a) |
| Power supply unit (140b) |
| Sensor unit (140c) |
| Autonomous driving unit (140d) |

108    208

| Device (100, 200) |
| --- |
| Communication unit (210) |
| Control unit (220) |
| Memory unit (230) |
| Driving unit (140a) |
| Power supply unit (140b) |
| Sensor unit (140c) |
| Autonomous driving unit (140d) |

## FIG. 19

Vehicle or autonomous driving vehicle (100)

Communication unit (110)

Control unit (120)

Memory unit (130)

I/O unit (140a)
(e.g., HUD)

Positioning unit (140b)
(e.g., GPS, sensor)

140m

140n

Virtual World

FIG. 20

XR device (100a)

100a

100b

Communication unit (110)

Control unit (120)

Memory unit (130)

I/O unit (140a)

Sensor unit (140b)

Power supply unit (140c)

FIG. 21

Robot (100)

Communication unit (110)

Control unit (120)

Memory unit (130)

I/O unit (140a)

Sensor unit (140b)

Driving unit (140c)

FIG. 22

<u>100</u>

120 — Communication unit

140a — Input unit

140c — Learning Processor unit

Control unit

Memory unit — 130

Output unit — 140b

Sensor unit — 140d

120

## INTERNATIONAL SEARCH REPORT

| International application No. |
| --- |
| **PCT/KR2023/014050** |

| A. | CLASSIFICATION OF SUBJECT MATTER |
| --- | --- |

**H04W 40/22**(2009.01)i; **H04W 40/12**(2009.01)i; **H04W 36/00**(2009.01)i; **H04W 76/18**(2018.01)i; **H04W 76/14**(2018.01)i; **H04W 88/04**(2009.01)i; **H04L 45/24**(2022.01)i

According to International Patent Classification (IPC) or to both national classification and IPC

| B. | FIELDS SEARCHED |
| --- | --- |

Minimum documentation searched (classification system followed by classification symbols)

H04W 40/22(2009.01); H04W 36/00(2009.01); H04W 36/08(2009.01); H04W 36/30(2009.01); H04W 88/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리모트(remote) UE, 핸드오버(handover, HO) request, 타겟 기지국(target gNB), 서빙 기지국(serving gNB), RRC reconfiguration with sync, 릴레이(relay) UE, multi-path relay, RRC reconfiguration complete

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | ZTE. Service continuity enhancement for SL relay. R2-224371, 3GPP TSG-RAN WG3 Meeting #117, Electronic Meeting. 09 August 2022.<br>See section 2.2; and figure 2. | 1-11 |
| Y | OPPO. Discussion on multi-path SL relay. R2-2207015, 3GPP TSG-RAN WG2 #119-e, E-meeting. 10 August 2022.<br>See pages 3-5. | 1-11 |
| A | LG ELECTRONICS INC. Service continuity enhancements for L2 U2N relay. R3-224751, 3GPP TSG-RAN WG3 Meeting #117-e, Electronic meeting. 09 August 2022.<br>See pages 2 and 5-6; and figure 3. | 1-11 |
| A | US 2021-0385714 A1 (QUALCOMM INCORPORATED) 09 December 2021 (2021-12-09)<br>See paragraphs [0084]-[0085]; and claims 1-6. | 1-11 |
| A | US 2022-0046485 A1 (LG ELECTRONICS INC.) 10 February 2022 (2022-02-10)<br>See paragraphs [0009]-[0010]; and claim 1. | 1-11 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **04 January 2024** | **05 January 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

EP 4 590 026 A1

**INTERNATIONAL SEARCH REPORT**
Information on patent family members

International application No.

**PCT/KR2023/014050**

| Patent document cited in search report | | | Publication date (day/month/year) | Patent family member(s) | | | Publication date (day/month/year) |
|---|---|---|---|---|---|---|---|
| US | 2021-0385714 | A1 | 09 December 2021 | CN | 115699878 | A | 03 February 2023 |
| | | | | EP | 4162725 | A1 | 12 April 2023 |
| | | | | US | 11737001 | B2 | 22 August 2023 |
| | | | | WO | 2021-252177 | A1 | 16 December 2021 |
| US | 2022-0046485 | A1 | 10 February 2022 | None | | | |

Form PCT/ISA/210 (patent family annex) (July 2022)